# EUROPEAN PATENT APPLICATION

(11) **EP 4 672 413 A1**
(43) Date of publication of application: **31.12.2025**
(21) Application number: 23925646.4
(22) Date of filing: 03.03.2023
(51) Int. Cl.: H01M 10/0569, H01M 10/0525

(54) **ELECTROLYTE, BATTERY AND ELECTRICAL APPARATUS**

(71) Applicant: Contemporary Amperex Technology (Hong Kong) Limited, Hong Kong (HK)
(72) Inventor: WANG, Hansen, Ningde, Fujian 352100 (CN); LIU, Chengyong, Ningde, Fujian 352100 (CN); YANG, Qifan, Ningde, Fujian 352100 (CN); WAN, Pan, Ningde, Fujian 352100 (CN); ZHAO, Yu, Ningde, Fujian 352100 (CN); HU, Bobing, Ningde, Fujian 352100 (CN)
(74) Representative: Gong, Jinping
(86) International application number: PCT/CN2023/079519
(87) International publication number: WO 2024/182918

(57) **Abstract**

The present application provides an electrolyte, a battery, and an electrical device, the electrolyte comprises a solvent and an electrolytic salt dissolved in the solvent, the solvent comprises a first solvent comprising an ether solvent, and the ether solvent has a molecular structure in which the α-carbon atom directly bonded to an oxygen atom in an ether-oxygen bond function group does not have a hydrogen atom directly bonded to the α-carbon atom.

## Description

### TECHNICAL FIELD

The present application relates to an electrolyte, a battery, and an electrical device.

### BACKGROUND

Recently, a battery is widely applied in an energy storage power system, such as a hydraulic, thermal, wind, or solar power plant, etc., and the fields of a power tool, an electric bicycle, an electric motorcycle, an electric vehicle, military equipment, aerospace, or the like. As the battery is applied more and more widely, the battery requires a battery system having a higher energy density than that of a conventional battery using a carbon-based material as a negative electrode. A battery in which a material such as lithium metal is used as a negative electrode has a high energy density. However, the battery has short cycle life. The above statement merely provides the background information related to the present application and do not necessarily constitute the prior art.

### SUMMARY

The present application provides an electrolyte, a battery, and an electrical device, and the electrolyte can improve the cycle life of the battery, particularly when the battery is under a high voltage.

A first aspect of the present application provides an electrolyte comprising a solvent and an electrolytic salt dissolved in the solvent, wherein the solvent comprises a first solvent, the first solvent comprises an ether solvent, and the ether solvent has a molecular structure in which the α-carbon atom directly bonded to an oxygen atom in an ether-oxygen bond function group does not have a hydrogen atom directly bonded to the α-carbon atom.

The first solvent comprises an ether solvent, and the ether solvent has a molecular structure in which the α-carbon atom directly bonded to an oxygen atom in an ether-oxygen bond function group does not have a hydrogen atom directly bonded to the α-carbon atom, thereby improving the oxidation resistance of the ether solvent and reducing the generation of radicals after oxidative dehydrogenation of the α-carbon atom. Further, the first solvent comprises an ether solvent, and the ether solvent has a molecular structure in which the α-carbon atom directly bonded to the oxygen atom of the ether-oxygen bond function group does not have a hydrogen atom directly bonded to the α-carbon atom, thereby the group bonded to the α-carbon atom can also lower the solvation energy, thereby promoting the decomposition of the anion portion of the electrolytic salt to participate in the formation of the solid electrolyte interface film. Therefore, the electrolyte provided by the embodiment of the present application can improve the cycle life of a battery, particularly when the battery is under a high voltage.

In any embodiment of the present application, the ether solvent comprises 1-5 ether-oxygen bond function groups.

In any embodiment of the present application, the ether solvent has a chain structure or a cyclic structure.

In any embodiment of the present application, the ether solvent comprises one or more of the compounds represented by formula I, and formula II.

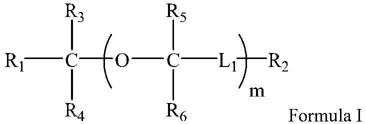

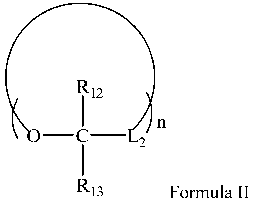

In formula I, m is an integer of 1-5, R₁ includes one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, R₂ comprises one or more of a hydrogen atom, a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, and R₃, R₄, R₅, and R₆ each independently comprise one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl.

L₁ each independently comprises a single bond, and a group as shown by 1a or 1b, and # represents a connection position, wherein R₇, R₈, R₉, and R₁₀ each independently comprise one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, R₁₁ each independently comprise one or more of C1-C5 alkylene, C1-C5 haloalkylene, C3-C7 cycloalkylene, C3-C7 halocycloalkylene, C6-C10 arylene, and C6-C10 haloarylene, and R₂ is not a hydrogen atom when L₁ is a single bond.

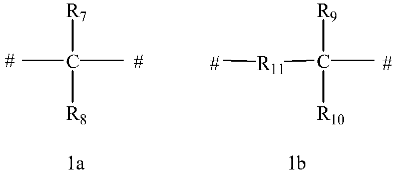

In formula II, n is an integer of 1-5, and R₁₂, and R₁₃ each independently comprise one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, and
L₂ each independently comprises a single bond, and a group as shown by 2a or 1b, and # represents a connection position, wherein R₁₄, R₁₅, R₁₆, and R₁₇ each independently comprise one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, and R₁₈ each independently comprises one or more of C1-C5 alkylene, C1-C5 haloalkylene, C3-C7 cycloalkylene, C3-C7 halocycloalkylene, C6-C10 arylene, and C6-C10 haloarylene.

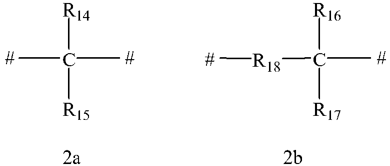

In any embodiment of the present application, the ether solvent comprises a first ether solvent comprising one or more of the compounds represented by formula I, and formula II. And in formula I, R₁ comprises one or more of C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, R₃, R₄, R₅, and R₆ each independently comprise one or more of C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, R₇, R₈, R₉, and R₁₀ each independently comprise one or more of C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, and R₂ is not a hydrogen atom or a halogen atom when L₁ is a single bond. In formula II, R₁₂, and R₁₃ each independently comprise one or more of C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, and R₁₄, R₁₅, R₁₆, and R₁₇ each independently comprise one or more of C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl.

The first ether solvent has a molecular structure in which the α-carbon atom directly bonded to the oxygen atom in the ether-oxygen bond function group (-O-) does not have a hydrogen atom directly bonded to the α-carbon atom and a halogen atom directly bonded to the α-carbon atom, thereby improving the solubility and the degree of dissociation of an electrolytic salt in an electrolyte while improving the oxidation resistance of the electrolyte, so that the electrolyte can be improved for ionic conductivity to improve cycle life of a battery.

In any embodiment of the present application, the first ether solvent satisfies at least one of the following conditions (1)-(11):
(1) R₁ comprises one or more of C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally, R₁ comprises C1-C3 alkyl;
(2) R₂ comprises one or more of a hydrogen atom, a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally, R₂ comprises one or more of a hydrogen atom, and C1-C3 alkyl;
(3) R₃, R₄, R₅, and R₆ each independently comprise one or more of C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally R₃, R₄, R₅, and R₆ each independently comprise C1-C3 alkyl;
(4) R₇, R₈, R₉, and R₁₀ each independently comprise one or more of C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally R₇, R₈, R₉, and R₁₀ each independently comprise C1-C3 alkyl;
(5) R₁₁ each independently comprises one or more of C1-C5 alkylene, and C1-C5 haloalkylene, and optionally R₁₁ each independently comprises C1-C3 alkylene;
(6) R₁₂, and R₁₃ each independently comprise one or more of C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally R₁₂, and R₁₃ each independently comprise C1-C3 alkyl;
(7) R₁₄, R₁₅, R₁₆, and R₁₇ each independently comprise one or more of C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally R₁₄, R₁₅, R₁₆, and R₁₇ each independently comprise C1-C3 alkyl;
(8) R₁₈ each independently comprises one or more of C1-C5 alkylene, and C1-C5 haloalkylene, and optionally R₁₈ each independently comprises C1-C3 alkylene;
(9) m is 1, 2 or 3, and optically, m is 1 or 2;
(10) n is 1, 2 or 3, and optically, n is 1 or 2; and
(11) the first ether solvent does not contain a halogen atom.

In any embodiment of the present application, the ether solvent comprises a second ether solvent comprising one or more of the compounds represented by formula I, and formula II. And in formula I, at least one of R₁, R₃, R₄, R₅, R₆, R₇, R₈, R₉, and R₁₀ is a fluorine atom. In formula II, at least one of R₁₂, R₁₃, R₁₄, R₁₅, R₁₆ and R₁₇ is a fluorine atom.

The second ether solvent has a molecular structure in which the α-carbon atom directly bonded to the oxygen atom of the ether-oxygen bond function group (-O-) does not have a hydrogen atom directly bonded to the α-carbon atom, but has at least one fluorine atom directly bonded to the α-carbon atom, thereby reducing the viscosity of an electrolyte while promoting the formation of a fluorine-rich solid electrolyte interface film, thereby facilitating to the longer cycle life of the battery.

In any embodiment of the present application, the second ether solvent satisfies at least one of the following conditions (1)-(13):
(1) R₁ comprises one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally, R₁ comprises one or more of a halogen atom, C1-C3 alkyl, and C1-C3 haloalkyl,
(2) R₂ comprises one or more of a hydrogen atom, a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally, R₂ comprises one or more of a hydrogen atom, a halogen atom, C1-C3 alkyl, and C1-C3 haloalkyl;
(3) R₃, R₄, R₅, and R₆ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally R₃, R₄, R₅, and R₆ each independently comprise one or more of a halogen atom, C1-C3 alkyl, and C1-C3 haloalkyl;
(4) R₇, R₈, R₉, and R₁₀ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally, R₇, R₈, R₉, and R₁₀ each independently comprise one or more of a halogen atom, C1-C3 alkyl, and C1-C3 haloalkyl;
(5) R₁₁ each independently comprises one or more of C1-C5 alkylene, and C1-C5 haloalkylene, and optionally, R₁₁ each independently comprises one or more of C1-C3 alkylene, and C1-C3 haloalkylene;
(6) R₁₂, and R₁₃ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally, R₁₂, and R₁₃ each independently comprise one or more of a halogen atom, C1-C3 alkyl, and C1-C3 haloalkyl;
(7) R₁₄, R₁₅, R₁₆, and R₁₇ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally, R₁₄, R₁₅, R₁₆, and R₁₇ each independently comprise one or more of a halogen atom, C1-C3 alkyl, and C1-C3 haloalkyl;
(8) R₁₈ each independently comprises one or more of C1-C5 alkylene, and C1-C5 haloalkylene, and optionally, R₁₈ each independently comprises one or more of C1-C3 alkylene, and C1-C3 haloalkylene;
(9) R₁, R₃, R₄, R₅, R₆, R₇, R₈, R₉, and R₁₀ are fluorine atoms;
(10) R₁₂, R₁₃, R₁₄, R₁₅, R₁₆ and R₁₇ are fluorine atoms;
(11) m is 1, 2 or 3, and optically, m is 1 or 2;
(12) n is 1, 2 or 3, and optically, n is 1 or 2; and
(13) the second ether solvent has a perfluoroether structure.

In any embodiment of the present application, the ether solvent comprises the first ether solvent and the second ether solvent described above.

The first ether solvent has a molecular structure in which the α-carbon atom directly bonded to the oxygen atom in the ether-oxygen bond function group (-O-) does not have a hydrogen atom directly bonded to the α-carbon atom and a halogen atom directly bonded to the α-carbon atom. The second ether solvent has a molecular structure in which the α-carbon atom directly bonded to the oxygen atom of the ether-oxygen bond function group (-O-) does not have a hydrogen atom directly bonded to the α-carbon atom, but has at least one fluorine atom directly bonded to the α-carbon atom. The first ether solvent facilitates to improve the solubility and the degree of dissociation of an electrolytic salt in an electrolyte, and the second ether solvent facilitates to lower the viscosity of the electrolyte, thereby further improving the ionic conductivity of the electrolyte while promoting the formation of a fluorine-rich solid electrolyte interface film, so that a battery can have longer cycle life.

In any embodiment of the present application, the ether solvent comprises the first ether solvent and second ether solvent described above, and the mass of the first ether solvent denoted as a and the mass of the second ether solvent denoted as b enable 0.1: 1≤a: b≤10: 1, optionally 0.3: 1 ≤a: b≤3: 1, further optionally 0.5: 1 ≤a: b≤1.5: 1. By adjusting the mass ratio of the first ether solvent to the mass ratio of the second ether solvent within the above range, an electrolyte can have both good ion conductivity and relatively low viscosity, thereby enabling a battery to have longer cycle life and higher high-voltage stability.

In any embodiment of the present application, the first ether solvent comprises one or more of the following compounds:

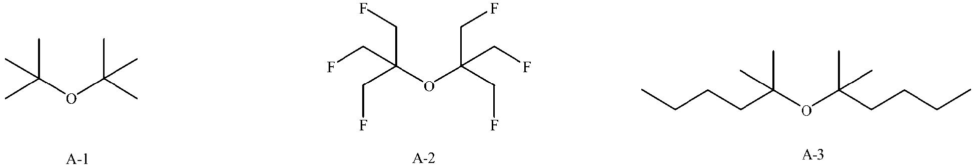

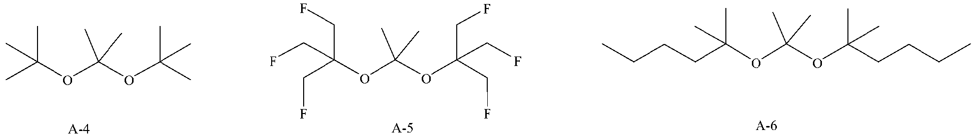

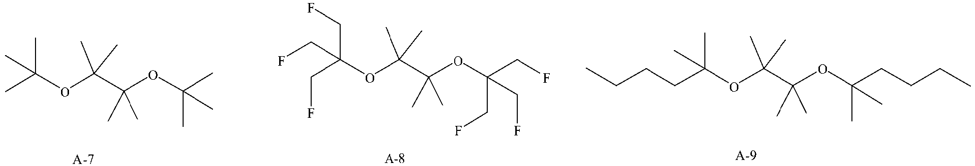

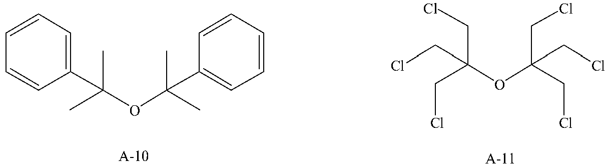

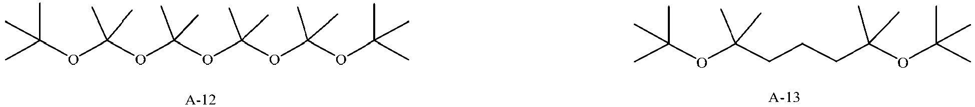

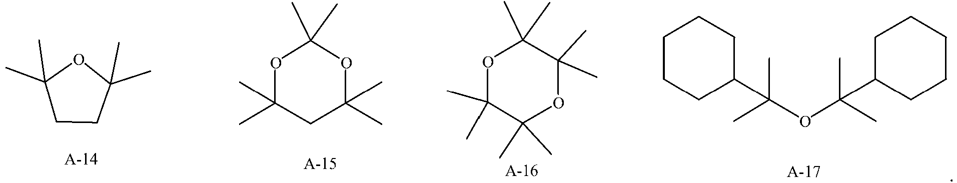

In any embodiment of the present application, optionally, the first ether solvent comprises one or more of A-1, A-4, and A-7. These first ether solvents have a relatively short branched chain structure and contain no halogen atom, so that the first ether solvent can maintain good dissolving ability and dissociating ability for an electrolytic salt without oxidative decomposition, thereby improving cycle life of a battery.

In any embodiment of the present application, the second ether solvent comprises one or more of the following compounds:

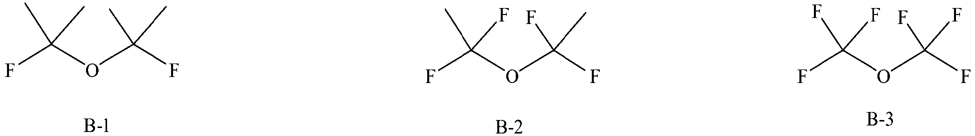

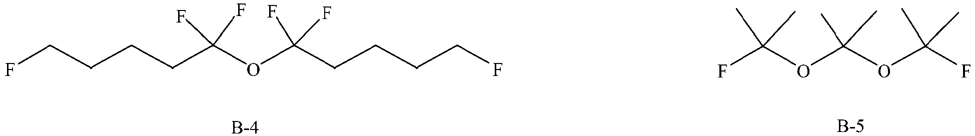

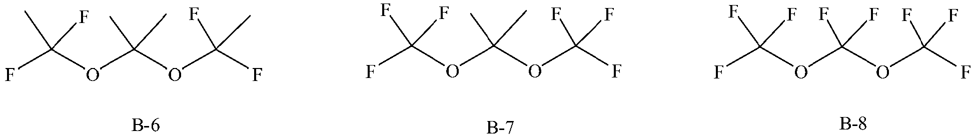

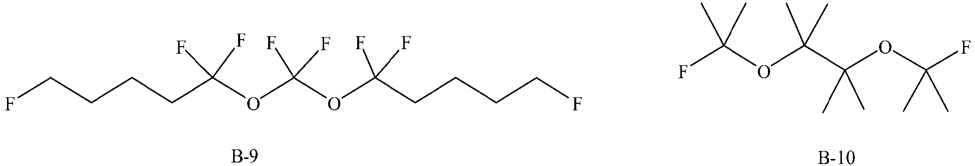

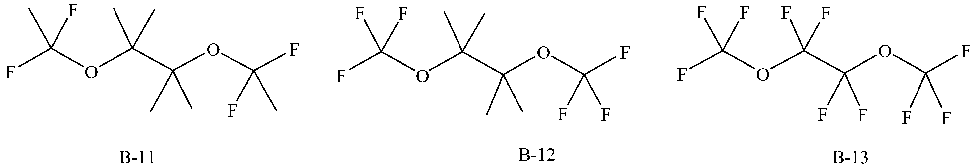

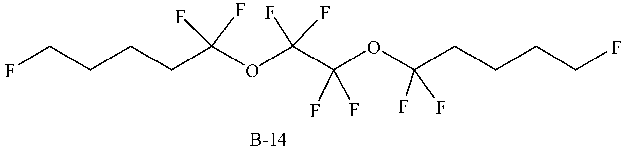

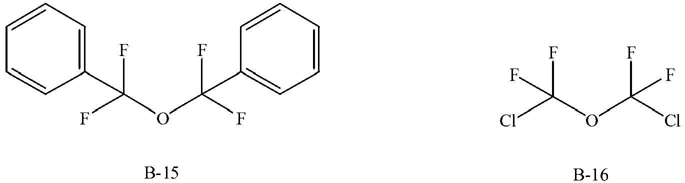

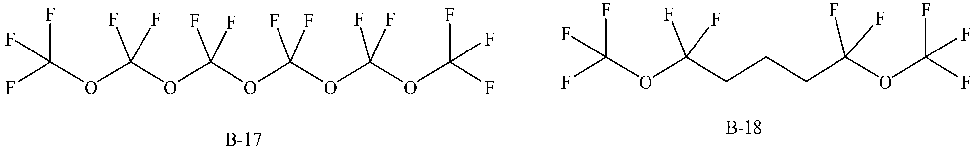

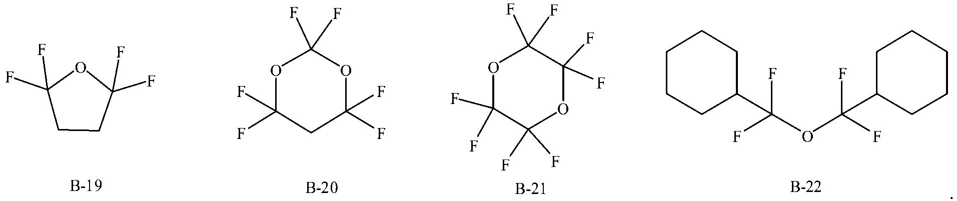

In any embodiment of the present application, optionally, the second ether solvent comprises one or more of B-3, B-8, and B-13. These second ether solvents, which have a relatively short branched chain structure and thus can have a lower viscosity, can further reduce a viscosity of an electrolyte while improving the oxidation resistance of the electrolyte, and facilitate to longer cycle life of a battery.

In any embodiment of the present application, the mass percent of the first solvent denoted as W₁ enables, based on the total mass of the solvent, 70%≤W₁≤100%, optionally 85%≤W₁≤100%.

In any embodiment of the present application, W₁ is 100%.

The first solvent having a content within the above range can increase dissolution of an electrolytic salt, thus, an electrolyte can have suitable ion conductivity, and good stability relative to a positive electrode and a negative electrode. Thus, the electrolyte has improved oxidation resistance to reduce the generation of radicals, thereby improving cycle life of a battery, particularly when the battery is under a high voltage.

In any embodiment of the present application, the solvent further comprises a second solvent comprising one or more of ester and haloester solvents, sulfone solvents, nitrile solvents, ether and fluoroether solvents, hydrocarbon and halohydrocarbon solvents; and optionally, the second solvent comprises one or more of ethylene carbonate, dimethyl carbonate, diethyl carbonate, methyl ethyl carbonate, ethylene carbonate, propylene carbonate, fluoroethylene carbonate, difluoroethylene carbonate, methyl trifluoroethyl carbonate, ethyl trifluoroethyl carbonate, di(2, 2, 2-trifluoroethyl)carbonate, methyl formate, ethyl formate, propyl formate, methyl acetate, ethyl acetate, propyl acetate, methyl propionate, ethyl propionate, propyl propionate, methyl 2, 2, 2-trifluoroacetate, ethyl 2, 2, 2-trifluoroacetate, methyl ether, ethyl ether, propyl ether, butyl ether, methyl ethyl ether, methyl propyl ether, methyl butyl ether, ethyl propyl ether, ethyl butyl ether, propyl butyl ether, dimethoxymethane, diethoxymethane, dipropoxymethane, dimethoxyethane, dimethoxypropane, diethoxyethane, ethylene glycol methyl ethyl ether, diethylene glycol dimethyl ether, triethylene glycol dimethyl ether, tetraethylene glycol dimethyl ether, tetrahydrofuran, 1, 3-dioxolane, tetrahydropyran, 1, 3-dioxane, 1, 4-dioxane, 1, 1, 2, 2-tetrafluoroethyl-2, 2, 3, 3-tetrafluoropropyl ether, 1, 2-bis(1, 1, 2, 2-tetrafluoroethoxy)ethane, di(2, 2, 2-trifluoroethyl)ether, 1, 1, 2, 3, 3, 3-hexafluoropropyl ethyl ether, 1H, 1H, 5H-octafluoropentyl-1, 1, 2, 2-tetrafluoroethyl ether, ethyl trifluoromethyl ether, difluoromethyl-2, 2, 3, 3, 3-pentafluoropropyl ether, heptafluoropropyl-1, 2, 2, 2-tetrafluoroethyl ether, difluoromethyl 2, 2, 3, 3-tetrafluoropropyl ether, perfluoroisopropyl methyl ether, 1, 1, 2, 2-tetrafluoroethyl-2, 2, 2-tetrafluoroethyl ether, ethyl-1, 1, 2, 2-tetrafluoroethyl ether, ethyl-1, 2, 2, 2-tetrafluoroethyl ether, bis(1, 2, 2, 2-tetrafluoroethyl) ether, dimethyl sulfone, dimethyl sulfoxide, sulfolane, ethylmethylsulfone, tetramethylenesulfoxide, ethylmethylsulfoxide, diethylsulfone, diethylsulfoxide, methylphenyl sulfone, methylphenyl sulfoxide, ethylphenyl sulfone, ethylphenyl sulfoxide, vinylphenyl sulfone, vinylphenyl sulfoxide, acetonitrile, propionitrile, butyronitrile, succinonitrile, 2-butenenitrile, cyclohexane, benzene, toluene, p-xylene, m-xylene, o-xylene, fluorobenzene, p-difluorobenzene, m-difluorobenzene, o-difluorobenzene, benzotrifluoride, trifluoromethoxybenzene, decafluoropentane, and perfluoropentanone.

In any embodiment of the present application, the mass percent of the second solvent denoted as W₂ enables, based on the total mass of the solvent, 0 < W₂≤30%, optionally 0 < W₂≤15%.

When the content of the second solvent is within the above range, the viscosity of the electrolyte can be reduced and/or the ionic conductivity of the electrolyte can be improved.

In any embodiment of the present application, the electrolyte further comprises an additive comprising one or more of propane sultone, vinyl sulfate, vinyl sulfite, tris(trimethylsilyl)phosphate, tris(trimethylsilyl)phosphite, tris(trifluoroethyl)phosphate, tris(trifluoroethyl)phosphite, tris (trimethylsilyl) borate, dimethyl maleic anhydride, and butyl 1, 4-diisocyanate.

In any embodiment of the present application, the electrolytic salt comprises a first metal cation and a first anion.

In any embodiment of the present application, the first metal cation comprises one or more of an alkali metal ion, an alkaline earth metal ion, a zinc ion, and an aluminum ion, and optionally one or more of a lithium ion, a sodium ion, a potassium ion, a magnesium ion, a calcium ion, a zinc ion, and an aluminum ion.

In any embodiment of the present application, the first anion comprises one or more of a bisfluorosulfonylimide anion (FSI⁻), bistrifluoromethanesulfonimide anion (TFSI⁻), bis(oxalato)borate anion (BOB⁻), difluorooxalate borate anion (DFOB⁻), difluorodioxalate phosphate anion (DFOP⁻), tetrafluorooxalate phosphate anion (TFOP⁻), difluorophosphate anion (PO₂F₂⁻), hexafluorophosphate anion (PF₆⁻), tetrafluoroborate anion (BF₄⁻), hexafluoroarsenate anion (AsF₆⁻), and triflate anion (CF₃SO₃⁻).

In any embodiment of the present application, the first anion comprises one or more of a bisfluorosulfonylimide anion (FSI⁻), bistrifluoromethanesulfonimide anion (TFSI⁻), bis(oxalato)borate anion (BOB⁻), difluorooxalate borate anion (DFOB⁻), difluorodioxalate phosphate anion (DFOP⁻), and tetrafluorooxalate phosphate anion (TFOP⁻). These first anions can be decomposed on a surface of a negative electrode to form an inorganic solid electrolyte interface film rich in inorganic fluorine components to promote dense deposition for metal, thereby facilitating to longer cycle life of a battery; and further, these first anions can also enable relatively high oxidation stability of the inorganic solid electrolyte interface film, which can support a cycle of a battery at a high voltage.

In any embodiment of the application, the concentration of the electrolytic salt is 0.5-4 mol/L, optionally 1.5-2.5 mol/L. By adjusting the concentration of the electrolytic salt within the above range, the ion transmission performance of the electrolyte and the stability of the electrolyte in the presence of the positive electrode and negative electrode are not affected, thereby facilitating to longer cycle life of a battery.

A second aspect of the present application provides a battery including a positive tab, a negative tab, and the electrolyte of the first aspect of the present disclosure.

In any embodiment of the present application, the negative tab comprises a negative current collector and a first metal layer provided on at least one surface of the negative current collector, the metal element in the first metal layer comprising one or more of an alkali metal element, an alkaline earth metal element, zinc, and aluminum.

In any embodiment of the present application, the metal material in the first metal layer comprises one or more of a simple substance of lithium, a lithium alloy, a simple substance of sodium, a sodium alloy, a simple substance of potassium, a potassium alloy, a simple substance of magnesium, a magnesium alloy, a simple substance of zinc, a zinc alloy, a simple substance of aluminum, and an aluminum alloy.

In any embodiment of the present application, the negative tap comprises only a negative current collector.

In any embodiment of the present application, the negative current collector comprises a metal foil sheet, a three dimensional porous current collector, or a composite current collector.

A third aspect of the present application provides an electrical device including the battery of the second aspect of the present application.

The electrical device of the present application includes the battery provided by the present application, and thus has at least the same advantages as the battery.

### DESCRIPTION OF THE DRAWINGS

In order to more clearly illustrate the technical solution in the embodiment of the present application, the figures used in the embodiment are briefly described below. Obviously, the figures described below are only some embodiments of the present application, and according to the figures, a person of ordinary skill in the art can obtain other figures without the exercise of inventive effort.
FIG. 1 is a schematic view of an embodiment of a battery of the present application.
FIG. 2 is an exploded schematic view of an embodiment of a battery of the present application.
FIG. 3 is a schematic view of an embodiment of a battery module of the present application.
FIG. 4 is a schematic view of an embodiment of a battery pack of the present application.
FIG. 5 is an exploded schematic view of the embodiment of the battery pack shown in FIG. 4.
FIG. 6 is a schematic view of an embodiment of an electrical device including the battery of the present application as a power source.

The figures are not necessarily drawn to the actual scale. Reference Number: 1 Battery Pack, 2 Upper Box Body, 3 Lower Box Body, 4 Battery Module, 5 Battery, 51 Housing, 52 Electrode Assembly, 53 Cover Plate.

### DETAILED DESCRIPTION

Hereinafter, the embodiments of the electrolyte, battery, and electrical device according to the present application are described below in detail with reference to the figures as appropriate. However, unnecessary detailed description may be omitted. For example, detailed description of well-known items and redundant description of substantially the same configuration may be omitted. This is to avoid unnecessarily redundant description in the following to facilitate understanding of those skilled in the art. Additionally, the figures and the following description are provided for those skilled in the art to fully understand the present application, and are not intended to limit the subject matter described in the claims.

"Range" disclosed herein are defined by a lower limit and an upper limit, and a given range is defined by selecting a lower limit and an upper limit which define boundaries of a particular range. The range defined in such a mode may include or exclude an end value, and may have arbitrary combinations, i.e., any lower limit may be combined with any upper limit to form a range. For example, if ranges of 60-120 and 80-110 are listed for a particular parameter, it is understood that ranges of 60-110 and 80-120 are also contemplated. Further, if the smallest range values of 1 and 2 and the largest range values of 3, 4 and 5 are listed, the following ranges are all contemplated: 1-3, 1-4, 1-5, 2-3, 2-4, and 2-5. In the present application, unless otherwise stated, numerical range "a-b" is short for any combinations of real numbers between a and b, where a and b are both real numbers. For example, numerical range "0-5" means that all real numbers within "0-5" are set forth herein, and "0-5" is merely short for these numerical combinations. Further, when a parameter is expressed as an integer 22, it is equivalent to disclose that the parameter is, for example, an integer of 2, 3, 4, 5, 6, 7, 8, 9, 10, 11, 12, or the like.

Unless otherwise specified, all embodiments and optional embodiments of the present application may be combined with each other to form new technical solutions, and it is conceivable that such technical solutions should be included in the application of the present application.

Unless otherwise specified, all technical solutions and optional technical solutions of the present application may be combined with each other to form new technical solutions, and it is conceivable that such technical solutions should be included in the application of the present application.

Unless otherwise specified, all the steps in the present application may be performed sequentially or randomly, preferably sequentially. For example, the method comprises steps (a) and (b), meaning that the method may comprise steps (a) and (b) performed sequentially or steps (b) and (a) performed sequentially. For example, the mentioned method may further comprise step (c), meaning that step (c) may be added to the method in any order, e.g. the method may comprise steps (a), (b) and (c), or steps (a), (c) and (b), or steps (c), (a) and (b), etc.

Unless otherwise specified, the terms "comprising" and "including" as used in the present application are open-ended or close-ended. For example, "comprising" and "including" may mean that other components not listed may be further comprised or included, or only the listed components may be comprised or included.

In the application, term "or" is inclusive, unless specifically specified otherwise. For example, phrase "A or B" means "A, B, or both A and B". More specifically, condition "A or B" is satisfied by either A being true (or present) and B being false (or absent), A being false (or absent) and B being true (or present), or both A and B being true (or present).

In the present application, terms "first", "second", etc. are used to distinguish different objects and not to describe a particular order or relation, unless otherwise specified.

Unless otherwise specified, the terms used in the present application have the meanings commonly understood by those skilled in the art.

Unless otherwise specified, the numerical values of each parameter mentioned in the present application can be determined by various test methods commonly used in the art, for example, according to the test methods in the example of the present application.

Term "alkyl" encompasses both linear-chain alkyl and branched-chain alkyl. Examples of alkyl includes, but are not limited to, methyl, ethyl, propyl, isopropyl, butyl, isobutyl, t-butyl, pentyl, isopentyl, and the like.

Term "cycloalkyl" refers to a closed alicyclic ring system. Examples of cycloalkyl include, but are not limited to, cyclopropyl, cyclobutyl, cyclopentyl, cyclohexyl, and the like.

Term "aryl" refers to a closed aromatic ring or ring system. Examples of aryl include, but are not limited to, phenyl, naphthyl, and the like.

Term "hydrogen atom" means 1H (protium, H), 2H (deuterium, D) or 3H (tritium, T). In embodiments, "hydrogen atom" may be 1H (protium, H).

Term "halogen atom" means a fluorine atom, a chlorine atom, a bromine atom and the like.

Term "haloalkyl" refers to an alkyl in which at least one hydrogen atom is replaced with a halogen atom. Haloalkyl may have one or more halogen atoms, and when haloalkyl has a plurality of halogen atoms, the halogen atoms may be the same or different.

Term "halocycloalkyl" refers to an alkyl in which at least one hydrogen atom is replaced with a halogen atom. Halocycloalkyl may have one or more halogen atoms, and when halocycloalkyl has a plurality of halogen atoms, the halogen atoms may be the same or different.

Term "haloaryl" refers to an aryl in which at least one hydrogen atom is replaced with a halogen atom. Haloaryl may have one or more halogen atoms, and when haloaryl has a plurality of halogen atoms, the halogen atoms may be the same or different.

Throughout the description, substituents of compounds are disclosed in groups or ranges. It is expressly expected that the description of the groups or ranges includes each individual sub-combination of the members of the groups and ranges. For example, it is expressly expected that term " C1-C5 alkyl "discloses each of C1, C2, C3, C4, C5, C1-C5, C1-C4, C1-C3, C1-C2, C2-C5, C2-C4, C2-C3, C3-C5, C3-C4, and C4-C5 alkyl. As other examples, it is expressly expected that integers ranging from 1-5 disclose each of 1, 2, 3, 4, and 5, and thus, other groups or ranges may be expressly expected.

The battery provided by the embodiment of the present application includes a battery in which a simple substance of an alkali metal, an alkaline earth metal, zinc, or aluminum, an alloy thereof, or the like is used as an negative electrode active material. For example, the battery provided by the embodiment of the present application includes a metal battery, a metal-air battery, a metal-sulfur battery, a negative electrode-free metal battery, or the like. As an example, the battery may be a lithium metal battery, a negative electrode-free lithium metal battery, a lithium-air battery, a lithium-sulfur battery, a sodium metal battery, a negative electrode-free sodium metal battery, a sodium-air battery, a sodium-sulfur battery, a potassium metal battery, a negative electrode-free potassium metal battery, a potassium-air battery, a potassium-sulfur battery, a magnesium metal battery, a negative electrode-free magnesium metal battery, a magnesium-air battery, a magnesium-sulfur battery, a zinc metal battery, a negative electrode-free zinc metal battery, a zinc-air battery, a zinc-sulfur battery, an aluminum metal battery, a negative electrode-free aluminum metal battery, an aluminum-air battery, and an aluminum-sulfur battery, which are not limited in the embodiments of the present application.

The battery having a negative electrode active material which is a simple substance of an alkali metal, an alkaline earth metal, zinc, or aluminum, an alloy thereof, or the like attracts great attention due to its high energy density. However, the battery above faces challenges for large-scale application. For example, the battery has a relatively low coulombic efficiency and insufficient cycle life due to non-uniform deposition of metal at its negative electrode, poor stability of a negative-electrode-electrolyte interface, easy growth of dendrites at its negative electrode, and the like.

To improve the coulombic efficiency and cycle life of the battery, currently, an employed strategy is mainly to adjust electrolyte components. Researchers find that the coulombic efficiency and cycle life of the battery can be improved since the growth of dendrites can be reduced when an ether solvent such as diethyl ether or ethylene glycol dimethyl ether is used as a main solvent for the electrolyte. However, in further studies, the inventor finds: the above-mentioned ether solvent has lower oxidation resistance than an ester solvent, and after long-term cycle, oxidative decomposition of the solvent or even failure of a battery is caused, thereby resulting in a limited effect of improving cycle life of a battery.

In such a case, the inventor further improves an electrolyte of a battery.

The electrolyte provided by an embodiment of the present application comprises a solvent and an electrolytic salt dissolved in the solvent, the solvent comprises a first solvent comprising an ether solvent, and the ether solvent has a molecular structure in which the α-carbon atom directly bonded to an oxygen atom in an ether-oxygen bond function group (-O-) does not have a hydrogen atom directly bonded to the α-carbon atom.

The inventor finds in further studies that a positive electrode active material often releases a trace amount of oxygen or active oxygen during charging, and has transition metal on its surface which also has a catalytic effect; and the core reason why a conventional ether solvent can't support long cycle life of a battery at a high pressure is that the conventional ether solvent has the α-carbon atom directly bonded to the oxygen atoms on the ether-oxygen bond function group generates a large number of free radicals after the oxidative dehydrogenation of the α-carbon atom, and the reaction formula is as follows (taking oxidative decomposition of ether as an example). After free radicals is generated, a chain reaction also triggered, leading to excess oxidative decomposition of an electrolyte, thereby destroying a structure of a positive electrode active material, increasing the amount of gas generated in the battery, and causing poor cycle life of a battery.

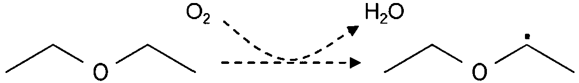

Currently, researchers use a fluoroether solvent as a strategy to improve a battery electrolyte, but they do not pay attention to the mechanism of oxidative decomposition of the ether solvent. Therefore, although the fluoroether solvent increases an oxidation potential as compared with a conventional ether solvent, the fluoroether solvent has a limited practical improvement effect on the cycle life of a battery; and also, the fluoroether solvent cannot support long cycle life of a battery at a high voltage.

In the electrode provided by the embodiment of the present application, the first solvent comprises an ether solvent, and the ether solvent has a molecular structure in which the α-carbon atom directly bonded to an oxygen atom in an ether-oxygen bond function group does not have a hydrogen atom directly bonded to the α-carbon atom, thereby improving the oxidation resistance of the ether solvent and reducing the generation of radicals after oxidative dehydrogenation of the α-carbon atom. Further, the first solvent comprises an ether solvent, and the ether solvent has a molecular structure in which the α-carbon atom directly bonded to the oxygen atom of the ether-oxygen bond function group does not have a hydrogen atom directly bonded to the α-carbon atom, thereby the group bonded to the α-carbon atom can also lower the solvation energy, thereby promoting the decomposition of the anion portion of the electrolytic salt to participate in the formation of the solid electrolyte interface film. Therefore, the electrolyte provided by the embodiment of the present application can improve the cycle life of a battery, particularly when the battery is under a high voltage.

In some embodiments, the ether solvent comprises 1-5 ether-oxygen bond function groups.

In some embodiments, the ether solvent has a chain structure or a cyclic structure.

In some embodiments, the ether solvent comprises one or more of the compounds represented by formula I, and formular II.

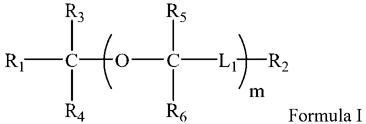

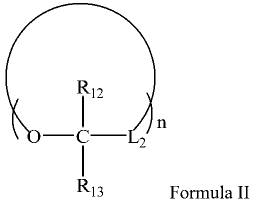

In formula I, m is an integer of 1-5. When m is an integer of 2-5, the groups in the m parentheses may be the same or different. For example, when m is 2, -O-C (R₅)(R₆)-L₁ - adjacent to R₁ is denoted as a first group, and -O-C(R₅)(R₆)-L₁ - adjacent to R₂ is denoted as the second group. R₅ in the first group and R₅ in the second group may be the same or different; R₆ in the first group and R₆ in the second group may be the same or different; L₁ in the first group and L₁ in the second group may be the same or different; or the first group (or the second group) has L₁ and the second group (or the first group) does not have L₁.

R₁ comprises one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl.

Optionally, R₁ comprises one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₁ comprises one or more of a halogen atom, C1-C3 alkyl, and C1-C3 haloalkyl. As a result, the steric hindrance of the ether solvent can be reduced to reduce adverse influence on the combination of an oxygen atom with an active ion due to excessive steric hindrance, facilitating higher ion conductivity of an electrolyte and thus longer cycle life of a battery.

R₂ comprises one or more of a hydrogen atom, a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl.

Optionally, R₂ comprises one or more of a hydrogen atom, a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₂ comprises one or more of a hydrogen atom, a halogen atom, C1-C3 alkyl, and C1-C3 haloalkyl. As a result, the steric hindrance of the ether solvent can be reduced to reduce adverse influence on the combination of an oxygen atom with an active ion due to excessive steric hindrance, facilitating higher ion conductivity of an electrolyte and thus longer cycle life of a battery.

R₃, R₄, R₅ and R₆ each independently comprise one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl.

Optionally, R₃, R₄, R₅, and R₆ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₃, R₄, R₅, and R₆ each independently comprise one or more of a halogen atom, C1-C3 alkyl, and C1-C3 haloalkyl. As a result, the steric hindrance of the ether solvent can be reduced to reduce adverse influence on the combination of an oxygen atom with an active ion due to excessive steric hindrance, facilitating higher ion conductivity of an electrolyte and thus longer cycle life of a battery.

L₁ each independently includes a single bond, a group as shown by 1a or 1b, and # represents a connection position. When L₁ represents a single bond, it means that the carbon atom adjacent to L₁ is directly connected to the oxygen atom in -O-C(R₅)(R₆) -L₁ - or R₂.

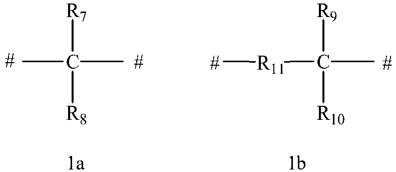

R₇, R₈, R₉ and R₁₀ each independently comprise one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl.

Optionally, R₇, R₈, R₉, and R₁₀ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₇, R₈, R₉, and R₁₀ each independently comprise one or more of a halogen atom, C1-C3 alkyl, and C1-C3 haloalkyl. As a result, the steric hindrance of the ether solvent can be reduced to reduce adverse influence on the combination of an oxygen atom with an active ion due to excessive steric hindrance, facilitating higher ion conductivity of an electrolyte and thus longer cycle life of a battery.

R₁₁ each independently comprises one or more of C1-C5 alkylene, C1-C5 haloalkylene, C3-C7 cycloalkylene, C3-C7 halocycloalkylene, C6-C10 arylene, and C6-C10 haloarylene. Optionally, R₁₁ independently each comprises one or more of C1-C5 alkylene, and C1-C5 haloalkylene. Further optionally, each R₁₁ independently comprises one or more of C1-C3 alkylene, and C1-C3 haloalkylene.

And R₂ is not a hydrogen atom when L₁ is a single bond.

In formula II, n is an integer of 1-5. When n is an integer of 2-5, the groups in the n parentheses may be the same or different. For example, when n is 2, one -O-C(R₁₂)(R₁₃) -L₂ - is denoted as a first group, and the other one -O-C (R₁₂)(R₁₃) -L₂ - is denoted as a second group. R₁₂ in the first group and R₁₂ in the second group may be the same or different; R₁₃ in the first group and R₁₃ in the second group may be the same or different; L₂ in the first group and L₂ in the second group may be the same or different; or the first group has L₂ and the second group does not have L₂.

R₁₂, and R₁₃ each independently comprise one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl.

Optionally, R₁₂, and R₁₃ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₁₂, and R₁₃ each independently comprise one or more of a halogen atom, C1-C3 alkyl, and C1-C3 haloalkyl. As a result, the steric hindrance of the ether solvent can be reduced to reduce adverse influence on the combination of an oxygen atom with an active ion due to excessive steric hindrance, facilitating higher ion conductivity of an electrolyte and thus longer cycle life of a battery.

L₂ each independently includes a single bond, and a group as shown by 2a or 2b, and # represents a connection position. When L₂ represents a single bond, it means that the carbon atom adjacent to L₂ is directly connected to an oxygen atom.

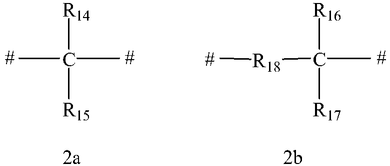

R₁₄, R₁₅, R₁₆and R₁₇ each independently comprises one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl.

Optionally, R₁₄, R₁₅, R₁₆, and R₁₇ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₁₄, R₁₅, R₁₆, and R₁₇ each independently comprise one or more of a halogen atom, C1-C3 alkyl, and C1-C3 haloalkyl. As a result, the steric hindrance of the ether solvent can be reduced to reduce adverse influence on the combination of an oxygen atom with an active ion due to excessive steric hindrance, facilitating higher ion conductivity of an electrolyte and thus longer cycle life of a battery.

R₁₈ each independently comprises one or more of C1-C5 alkylene, C1-C5 haloalkylene, C3-C7 cycloalkylene, C3-C7 halocycloalkylene, C6-C10 arylene, and C6-C10 haloarylene. Optionally, R₁₈ each independently comprises one or more of C1-C5 alkylene, and C1-C5 haloalkylene. Further optionally, each R₁₈ independently comprises one or more of C1-C3 alkylene, and C1-C3 haloalkylene.

In some embodiments, the ether solvent comprises a first ether solvent comprising one or more of the compounds represented by formula I, and formula II.

And in formula I, m is an integer of 1-5, R₁ comprises one or more of C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, R₂ comprises one or more of a hydrogen atom, a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, R₃, R₄, R₅, and R₆ each independently comprises one or more of C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, L₁ each independently comprises a single bond, a group as shown by 1a or 1b, and # indicates a connection position, wherein R₇, R₈, R₉, and R₁₀ each independently compries one or more of C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, R₁₁ each independently comprises one or more of C1-C5 alkylene, C1-C5 haloalkylene, C3-C7 cycloalkylene, C3-C7 halocycloalkylene, C6-C10 arylene, and C6-C10 haloarylene, and when L₁ is a single bond, R₂ is not a hydrogen atom or a halogen atom.

Optionally, m is 1, 2, or 3. Further optionally, m is 1 or 2.

Optionally, R₁ comprises one or more of C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₁ comprises one or more of C1-C3 alkyl, and C1-C3 haloalkyl. Still further optionally, R₁ comprises C1-C3 alkyl.

Optionally, R₂ comprises one or more of a hydrogen atom, a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₂ comprises one or more of a hydrogen atom, a halogen atom, C1-C3 alkyl, and C1-C3 haloalkyl. Still further alternatively, R₂ comprises one or more of a hydrogen atom, and C1-C3 alkyl.

Optionally, R₃, R₄, R₅, and R₆ each independently comprise one or more of C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₃, R₄, R₅, and R₆ each independently comprise one or more of C1-C3 alkyl, and C1-C3 haloalkyl. Still further alternatively, R₃, R₄, R₅, and R₆ each independently comprise C1-C3 alkyl.

Optionally, R₇, R₈, R₉, and R₁₀ each independently comprise one or more of C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₇, R₈, R₉, and R₁₀ each independently comprise one or more of C1-C3 alkyl, and C1-C3 haloalkyl. Still further alternatively, R₇, R₈, R₉, and R₁₀ each independently comprise C1-C3 alkyl.

Optionally, R₁₁ independently each comprises one or more of C1-C5 alkylene, and C1-C5 haloalkylene. Further optionally, each R₁₁ independently comprises one or more of C1-C3 alkylene, and C1-C3 haloalkylene. Still further alternatively, R₁₁ each independently comprises C1-C3 alkylene.

In formula II, n is an integer of 1-5, R₁₂, and R₁₃ each independently comprise one or more of C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, L₂ each independently comprise a single bond, a group as shown by 2a or 2b, and # represents a connection position, wherein R₁₄, R₁₅, R₁₆, and R₁₇ each independently comprise one or more of C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, and R₁₈ each independently comprises one or more of C1-C5 alkylene, C1-C5 haloalkylene, C3-C7 cycloalkylene, C3-C7 halocycloalkylene, C6-C10 arylene, and C6-C10 haloarylene.

Optionally, n is 1, 2, or 3. Further optionally, n is 1 or 2.

Optionally, R₁₂, and R₁₃ each independently comprise one or more of C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₁₂, and R₁₃ each independently comprise one or more of C1-C3 alkyl, and C1-C3 haloalkyl. Still further optionally, R₁₂, and R₁₃ each independently comprise C1-C3 alkyl.

Optionally, R₁₄, R₁₅, R₁₆, and R₁₇ each independently comprise one or more of C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₁₄, R₁₅, R₁₆, and R₁₇ each independently comprise one or more of C1-C3 alkyl, and C1-C3 haloalkyl. Still further optionally, R₁₄, R₁₅, R₁₆, and R₁₇ each independently comprise C1-C3 alkyl.

Optionally, R₁₈ each independently comprises one or more of C1-C5 alkylene, and C1-C5 haloalkylene. Further optionally, each R₁₈ independently comprises one or more of C1-C3 alkylene, and C1-C3 haloalkylene. Still further alternatively, R₁₈ each independently comprises C1-C3 alkylene.

The first ether solvent has a molecular structure in which the α-carbon atom directly bonded to the oxygen atom in the ether-oxygen bond function group (-O-) does not have a hydrogen atom directly bonded to the α-carbon atom and a halogen atom directly bonded to the α-carbon atom, thereby improving the solubility and the degree of dissociation of an electrolytic salt in an electrolyte while improving the oxidation resistance of the electrolyte, so that the electrolyte can be improved for ionic conductivity to improve cycle life of a battery.

In some embodiments, the halogen atom in the aforementioned halo group (e.g., haloalkyl, halocycloalkyl, and haloaryl) can be a fluorine atom. This is because the fluorine atom has a significant effect of improving the oxidation resistance of the first ether solvent, and also, can form a fluorine-rich solid electrolyte interface film, thereby facilitating the dense deposition for metal.

In some embodiments, the first ether solvent may also be free of halogen atoms. R₁ to R₁₈ are neither a halogen atom nor a halo group.

In some embodiments, the first ether solvent comprises one or more of the following compounds:

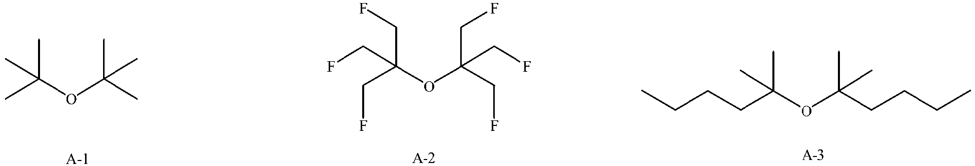

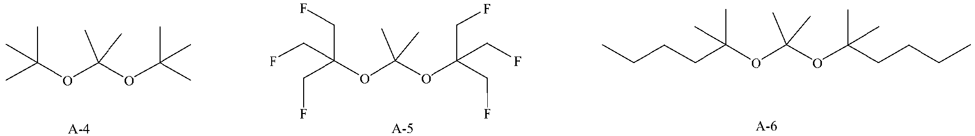

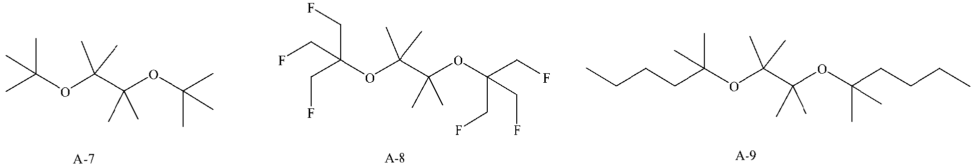

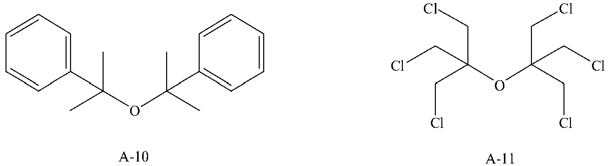

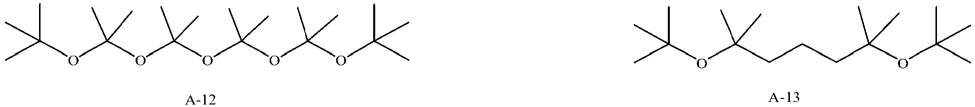

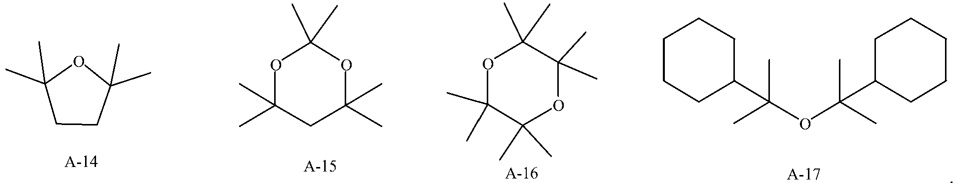

Optionally, the first ether solvent comprises one or more of A-1, A-4, and A-7. These first ether solvents have a relatively short branched chain structure and contain no halogen atom, so that the first ether solvent can maintain good dissolving ability and dissociating ability for an electrolytic salt without oxidative decomposition, thereby improving cycle life of a battery.

In some embodiments, the ether solvent may comprise a second ether solvent comprising one or more of the compounds represented by formula I, and formula II.

And in formula I, m is an integer of 1-5, R₁ comprises one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, R₂ comprises one or more of a hydrogen atom, a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, R₃, R₄, R₅, and R₆ each independently comprises one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, L₁ each independently comprises a single bond, a group as shown by 1a or 1b, and # indicates a connection position, wherein R₇, R₈, R₉, and R₁₀ each independently compries one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, R₁₁ each independently comprises one or more of C1-C5 alkylene, C1-C5 haloalkylene, C3-C7 cycloalkylene, C3-C7 halocycloalkylene, C6-C10 arylene, and C6-C10 haloarylene, and when L₁R is a single bond, R₂ is not a hydrogen atom, and at least one of R₁, R₃, R₄, R₅, R₆, R₇, R₈, R₉, and R₁₀ is a fluorine atom.

Optionally, m is 1, 2, or 3. Further optionally, m is 1 or 2.

Optionally, R₁ comprises one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₁ comprises one or more of a halogen atom, C1-C3 alkyl, and C1-C3 haloalkyl.

Optionally, R₂ comprises one or more of a hydrogen atom, a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₂ comprises one or more of a hydrogen atom, a halogen atom, C1-C3 alkyl, and C1-C3 haloalkyl.

Optionally, R₃, R₄, R₅, and R₆ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₃, R₄, R₅, and R₆ each independently comprise one or more of a halogen atom, C1-C3 alkyl, and C1-C3 haloalkyl.

Optionally, R₇, R₈, R₉, and R₁₀ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₇, R₈, R₉, and R₁₀ each independently comprise one or more of a halogen atom, C1-C3 alkyl, and C1-C3 haloalkyl.

Optionally, R₁₁ independently each comprises one or more of C1-C5 alkylene, and C1-C5 haloalkylene. Further optionally, each R₁₁ independently comprises one or more of C1-C3 alkylene, and C1-C3 haloalkylene.

Optionally, R₁, R₃, R₄, R₅, R₆, R₇, R₈, R₉, and R₁₀ are all fluorine atoms.

In formula II, n is an integer of 1-5, R₁₂, and R₁₃ each independently comprise one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, L₂ each independently comprise a single bond, a group as shown by 2a or 2b, and # represents a connection position, wherein R₁₄, R₁₅, R₁₆, and R₁₇ each independently comprise one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, R₁₈ each independently comprises one or more of C1-C5 alkylene, C1-C5 haloalkylene, C3-C7 cycloalkylene, C3-C7 halocycloalkylene, C6-C10 arylene, and C6-C10 haloarylene, and at least one of R₁₂, R₁₃, R₁₄, R₁₅, R₁₆, and R₁₇ is a fluorine atom.

Optionally, n is 1, 2, or 3. Further optionally, n is 1 or 2.

Optionally, R₁₂, and R₁₃ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R12, and R13 each independently comprise one or more of a halogen atom, C1-C3 alkyl, and C1-C3 haloalkyl.

Optionally, R₁₄, R₁₅, R₁₆, and R₁₇ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl. Further optionally, R₁₄, R₁₅, R₁₆, and R₁₇ each independently comprise one or more of a halogen atom, C1-C3 alkyl, and C1-C3 haloalkyl.

Optionally, R₁₈ each independently comprises one or more of C1-C5 alkylene, and C1-C5 haloalkylene. Further optionally, each R₁₈ independently comprises one or more of C1-C3 alkylene, and C1-C3 haloalkylene.

Optionally, R₁₂, R₁₃, R₁₄, R₁₅, R₁₆ and R₁₇ are fluorine atoms.

The second ether solvent has a molecular structure in which the α-carbon atom directly bonded to the oxygen atom of the ether-oxygen bond function group (-O-) does not have a hydrogen atom directly bonded to the α-carbon atom, but has at least one fluorine atom directly bonded to the α-carbon atom, thereby reducing the viscosity of an electrolyte while promoting the formation of a fluorine-rich solid electrolyte interface film, thereby facilitating to the longer cycle life of the battery.

In some embodiments, the halogen atom in the aforementioned halo group (e.g., haloalkyl, halocycloalkyl, and haloaryl) can be a fluorine atom. This is because the fluorine atom has a significant effect of improving the oxidation resistance of the second ether solvent, and also, can form a fluorine-rich solid electrolyte interface film, thereby facilitating the dense deposition for metal.

In some embodiments, the second ether solvent may has a perfluoroether structure.

In some embodiments, the second ether solvent may include one or more of the following compounds:

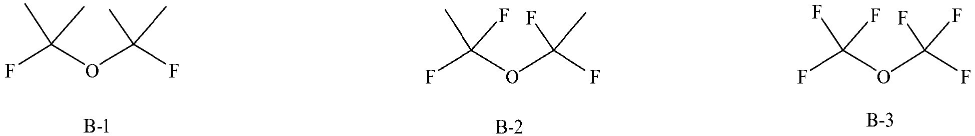

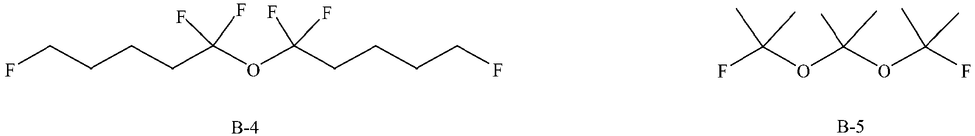

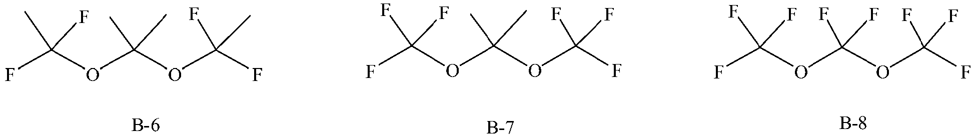

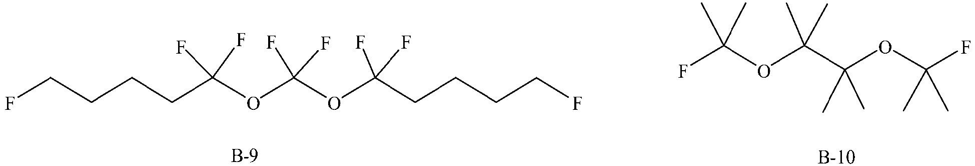

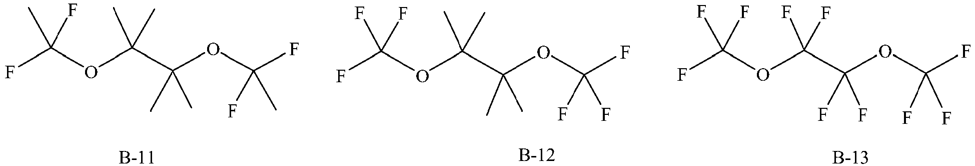

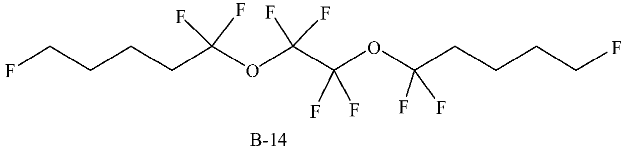

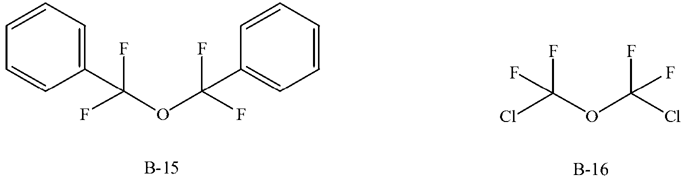

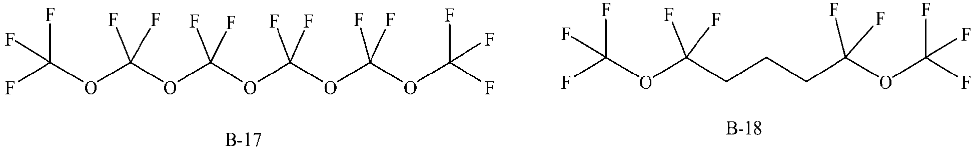

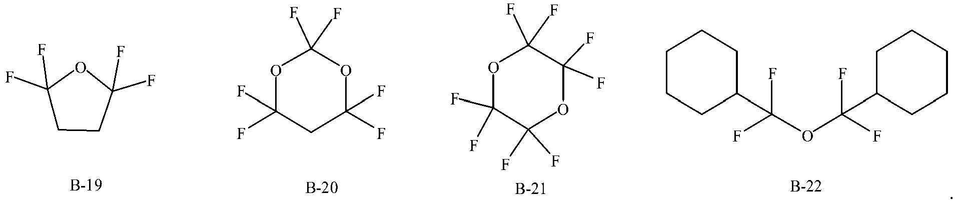

In some embodiments, optionally, the second ether solvent comprises one or more of B-3, B-8, and B-13. These second ether solvents, which have a relatively short branched chain structure and thus can have a lower viscosity, can further reduce a viscosity of an electrolyte while improving the oxidation resistance of the electrolyte, and facilitate to longer cycle life of a battery.

In some embodiments, the ether solvent may include both the first ether solvent and the second ether solvent described above.

The first ether solvent has a molecular structure in which the α-carbon atom directly bonded to the oxygen atom in the ether-oxygen bond function group (-O-) does not have a hydrogen atom directly bonded to the α-carbon atom and a halogen atom directly bonded to the α-carbon atom. The second ether solvent has a molecular structure in which the α-carbon atom directly bonded to the oxygen atom of the ether-oxygen bond function group (-O-) does not have a hydrogen atom directly bonded to the α-carbon atom, but has at least one fluorine atom directly bonded to the α-carbon atom. The first ether solvent facilitates to improve the solubility and the degree of dissociation of an electrolytic salt in an electrolyte, and the second ether solvent facilitates to lower the viscosity of the electrolyte, thereby further improving the ionic conductivity of the electrolyte while promoting the formation of a fluorine-rich solid electrolyte interface film, so that a battery can have longer cycle life.

In some embodiments, the ether solvent comprises the first ether solvent and second ether solvent described above, and the mass of the first ether solvent denoted as a and the mass of the second ether solvent denoted as b enable 0.1: 1 ≤a: b≤10: 1, optionally 0.3: 1≤a: b≤3: 1, further optionally 0.5: 1≤a: b≤1.5: 1. By adjusting the mass ratio of the first ether solvent to the mass ratio of the second ether solvent within the above range, an electrolyte can have both good ion conductivity and relatively low viscosity, thereby enabling a battery to have longer cycle life and higher high-voltage stability. As an example, a: b can be 0.1: 1, 0.3: 1, 0.5: 1, 1: 1, 1.5: 1, 2: 1, 3: 1, 4: 1, 5: 1, 6: 1, 7: 1, 8: 1, 9: 1, 10: 1, or a range composed of any number above.

In some embodiments, the mass percent of the first solvent denoted as W₁ enables, based on the total mass of the solvent, 70%≤W₁≤100%, optionally, 75%≤W₁≤100%, 80%≤W₁≤100%, 85%≤W₁≤100%, 90%≤W₁≤100%. The first solvent having a content within the above range can increase dissolution of an electrolytic salt, thus, an electrolyte can have suitable ion conductivity, and good stability relative to a positive electrode and a negative electrode. Thus, the electrolyte has improved oxidation resistance to reduce the generation of radicals, thereby improving cycle life of a battery, particularly when the battery is under a high voltage.

In some embodiments, W₁ may be 100%.

In some embodiments, the solvent may further comprise a second solvent.

The second solvent may comprise one or more of ester and halogenated ester solvents, sulfone solvents, nitrile solvents, ether and fluoroether solvents, hydrocarbon and halogenated hydrocarbon solvents.

As an example, the second solvent comprises one or more of ethylene carbonate, dimethyl carbonate, diethyl carbonate, methyl ethyl carbonate, ethylene carbonate, propylene carbonate, fluoroethylene carbonate, difluoroethylene carbonate, methyl trifluoroethyl carbonate, ethyl trifluoroethyl carbonate, di(2, 2, 2-trifluoroethyl)carbonate, methyl formate, ethyl formate, propyl formate, methyl acetate, ethyl acetate, propyl acetate, methyl propionate, ethyl propionate, propyl propionate, methyl 2, 2, 2-trifluoroacetate, ethyl 2, 2, 2-trifluoroacetate, methyl ether, ethyl ether, propyl ether, butyl ether, methyl ethyl ether, methyl propyl ether, methyl butyl ether, ethyl propyl ether, ethyl butyl ether, propyl butyl ether, dimethoxymethane, diethoxymethane, dipropoxymethane, dimethoxyethane, dimethoxypropane, diethoxyethane, ethylene glycol methyl ethyl ether, diethylene glycol dimethyl ether, triethylene glycol dimethyl ether, tetraethylene glycol dimethyl ether, tetrahydrofuran, 1, 3-dioxolane, tetrahydropyran, 1, 3-dioxane, 1, 4-dioxane, 1, 1, 2, 2-tetrafluoroethyl-2, 2, 3, 3-tetrafluoropropyl ether, 1, 2-bis(1, 1, 2, 2-tetrafluoroethoxy)ethane, di(2, 2, 2-trifluoroethyl)ether, 1, 1, 2, 3, 3, 3-hexafluoropropyl ethyl ether, 1H, 1H, 5H-octafluoropentyl-1, 1, 2, 2-tetrafluoroethyl ether, ethyl trifluoromethyl ether, difluoromethyl-2, 2, 3, 3, 3-pentafluoropropyl ether, heptafluoropropyl-1, 2, 2, 2-tetrafluoroethyl ether, difluoromethyl 2, 2, 3, 3-tetrafluoropropyl ether, perfluoroisopropyl methyl ether, 1, 1, 2, 2-tetrafluoroethyl-2, 2, 2-tetrafluoroethyl ether, ethyl-1, 1, 2, 2-tetrafluoroethyl ether, ethyl-1, 2, 2, 2-tetrafluoroethyl ether, bis(1, 2, 2, 2-tetrafluoroethyl)ether, dimethyl sulfone, dimethyl sulfoxide, sulfolane, ethylmethylsulfone, tetramethylenesulfoxide, ethylmethylsulfoxide, diethylsulfone, diethylsulfoxide, methylphenyl sulfone, methylphenyl sulfoxide, ethylphenyl sulfone, ethylphenyl sulfoxide, vinylphenyl sulfone, vinylphenyl sulfoxide, acetonitrile, propionitrile, butyronitrile, succinonitrile, 2-butenenitrile, cyclohexane, benzene, toluene, p-xylene, m-xylene, o-xylene, fluorobenzene, p-difluorobenzene, m-difluorobenzene, o-difluorobenzene, benzotrifluoride, trifluoromethoxybenzene, decafluoropentane, and perfluoropentanone.

In some embodiments, the mass percent of the second solvent denoted as W₂ enables, based on the total mass of the solvent, 0 < W₂≤30%, alternatively 0 < W₂≤25%, 0 < W₂≤20%, 0 < W₂≤15%, 0 < W₂≤10%. When the content of the second solvent is within the above range, the viscosity of the electrolyte can be reduced and/or the ionic conductivity of the electrolyte can be improved. And, the content of the second solvent should not be too high, and if the content is too high, the oxidation resistance of the first solvent cannot be enabled.

In some embodiments, the electrolyte may further include an additive. The type of the additive is not particularly limited as long as the subject matter of the present application is not impaired. As an example, the additive may comprise one or more of propane sultone, vinyl sulfate, vinyl sulfite, tris(trimethylsilyl)phosphate, tris(trimethylsilyl)phosphite, tris(trifluoroethyl)phosphate, tris(trifluoroethyl)phosphite, tris (trimethylsilyl) borate, dimethyl maleic anhydride, and butyl 1, 4-diisocyanate.

In some embodiments, the electrolytic salt includes a first metal cation and a first anion.

In some embodiments, the first metal cation comprises one or more of an alkali metal ion, an alkaline earth metal ion, a zinc ion, and an aluminum ion, and optionally one or more of a lithium ion, a sodium ion, a potassium ion, a magnesium ion, a calcium ion, a zinc ion, and an aluminum ion.

In some embodiments, the first anion comprises one or more of a bisfluorosulfonylimide anion (FSI⁻), bistrifluoromethanesulfonimide anion (TFSI⁻), bis(oxalato)borate anion (BOB⁻), difluorooxalate borate anion (DFOB⁻), difluorodioxalate phosphate anion (DFOP⁻), tetrafluorooxalate phosphate anion (TFOP⁻), difluorophosphate anion (PO₂F₂⁻), hexafluorophosphate anion (PF₆⁻), tetrafluoroborate anion (BF₄⁻), hexafluoroarsenate anion (AsF₆⁻), and triflate anion (CF₃SO₃⁻).

In some embodiments, optionally, the first anion may include one or more of a bisfluorosulfonylimide anion (FSI⁻), a bistrifluoromethanesulfonylimide anion (TFSI⁻), a bisoxalatoborate anion (BOB⁻), a difluorooxalatoborate anion (DFOB⁻), a difluorobisoxalatophosphate anion (DFOP⁻), and a tetrafluorooxalatophosphate anion (TFOP⁻). These first anions can be decomposed on a surface of a negative electrode to form an inorganic solid electrolyte interface film rich in inorganic fluorine components to promote dense deposition for metal, thereby facilitating to longer cycle life of a battery; and further, these first anions can also enable relatively high oxidation stability of the inorganic solid electrolyte interface film, which can support a cycle of a battery at a high voltage.

In some embodiments, the concentration of the electrolytic salt may be 0.5-4 mol/L, optionally 1-3 mol/L, 1.5-2.5 mol/L. By adjusting the concentration of the electrolytic salt within the above range, the ion transmission performance of the electrolyte and the stability of the electrolyte in the presence of the positive electrode and negative electrode are not affected, thereby facilitating to longer cycle life of a battery.

### Battery

An embodiment of the present application further provides a battery including the above electrolyte. The battery provided by the embodiment of the present application may have longer cycle life, and in particular, longer cycle life under a high voltage.

The battery further includes a positive tab and a negative tab. The positive tab and the negative tab may have specific structures and components selected according to the type of the battery, and the structures and components are not limited in the embodiments of the present application.

In some embodiments, the positive tab includes a positive current collector and a positive electrode film layer disposed on at least one surface of the positive current collector, the positive electrode film layer including a positive electrode active material. For example, the positive current collector has two surfaces opposite in its thickness direction, and the positive electrode film layer is provided on either one or both of the two opposite surfaces of the positive current collector.

The type of the positive electrode active material may be selected according to a type of a battery, and is not limited in the embodiments of the present application.

For example, when the battery is a lithium metal battery, or a negative electrode-free lithium metal battery, the positive electrode active material may include, but is not limited to, one or more of a lithium transition metal oxide, a lithium-containing phosphate, and their respective modifying compounds. Examples of the lithium transition metal oxide may include, but are not limited to, one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. Examples of the lithium-containing phosphates may include, but are not limited to, one or more of lithium iron phosphate, a composite of lithium iron phosphate and carbon, lithium manganese phosphate, a composite of lithium manganese phosphate and carbon, lithium ferric manganese phosphate, a composite of lithium ferric manganese phosphate and carbon, and respective modified compounds thereof. In some embodiments, to further increase the energy density of the battery, the positive electrode active material may include one or more of a lithium transition metal oxide having a general formula of LiₐNi_{b}Co_{c}M_{d}OₑA_{f} and a modified compound thereof. 0.8≤A≤1.2, 0.5, 0≤b < 1, 0 < c < 1, 0 < d < 1, 1≤e≤2, and 0≤f≤1, where M includes one or more of Mn, Al, Zr, Zn, Cu, Cr, Mg, Fe, V, Ti and B, and A includes one or more of N, F, S, and Cl.

As an example, the positive electrode active material may comprise LiCoO₂, LiNiO₂, LiMnO₂, LiMn₂O₄, LiNi_{1/3}Co_{1/3}Mn_{1/3}O₂(abbreviated as NCM333), LiNi_{0.5}Co_{0.2}Mn_{0.3}O₂ (abbreviated as NCM523), LiNi_{0.5}Co_{0.25}Mn_{0.25}O₂ (abbreviated as NCM211), LiNi_{0.6}Co_{0.2}Mn_{0.2}O₂ (abbreviated as NCM622), LiNi_{0.8}Co_{0.1}Mn_{0.1}O₂ (abbreviated as NCM811), LiNi_{0.96}Co_{0.02}Mn_{0.02}O₂ (abbreviated as Ni96), LiNi_{0.85}Co_{0.15}Al_{0.05}O₂, LiFePO₄, and LiMnPO₄.

When the battery is a sodium-metal battery or a negative-electrode-free sodium-metal battery, the positive electrode active material may include, but is not limited to, one or more of a sodium-containing transition metal oxide, a polyanionic material (such as phosphates, fluorophosphates, pyrophosphates, sulfates, and the like), and a Prussian blue material. As an example, the positive electrode active material may include one or more of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, NaMnPO₄NaCoPo₄, and a Prussian blue material of general formula XₚM'_{q}(PO₄)ᵣOₓY₃₋ₓ. In the general formula XₚM'_{q}(PO₄)ROₓY₃₋ₓ, it has 0 < p≤4, 0 < q≤2, 1≤r≤3, and 0≤x≤2, X comprises one or more of H⁺, Li⁺, Na⁺, K⁺, and NH₄⁺, M' comprises a transition metal optionally comprising one or more of V, Ti, Mn, Fe, Co, Ni, Cu and Zn, and Y comprises a halogen atom optionally comprising one or more of F, Cl and Br.

The modified compound of each of the above positive electrode active materials may be a compound of the positive electrode active material subjected to doping modification and/or surface coating modification.

When the battery is a lithium-sulfur battery or a sodium-sulfur battery, the positive electrode active material may include, but is not limited to, one or more of a simple substance of sulfur, a sulfur-carbon composite, a sulfur-conductive polymer composite, and a sulfur-metal oxide composite.

In some embodiments, the positive electrode film layer optionally further comprises a positive electrode conductive agent. The type of the positive electrode conductive agent is not particularly limited in the present application, and as an example, includes one or more of superconducting carbon, conductive graphite, acetylene black, carbon black, ketjen black, carbon dot, carbon nanotube, graphene, and carbon nanofiber.

In some embodiments, the positive electrode film layer optionally further comprises a positive electrode binder. The type of the positive electrode binder is not particularly limited herein, and as an example, may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, for the positive current collector, a metal foil sheet or a composite current collector may be employed. As an example of the metal foil sheet, an aluminum foil may be used. The composite current collector may include a high-molecule material base layer and a metal material layer formed on at least one surface of the high-molecule material base layer. As an example, the metal material may include one or more of aluminum, an aluminum alloy, nickel, a nickel alloy, titanium, a titanium alloy, silver, and a silver alloy. As an example, the high-molecule material base layer may include one or more of polypropylene (PP), polyethylene terephthalate (PET), polybutylene terephthalate (PBT), polystyrene (PS), and polyethylene (PE).

The positive electrode film layer may be formed by applying a positive electrode slurry to a positive current collector, and then drying, and cold pressing. The positive electrode slurry is generally formed by dispersing a positive electrode active material, an optional conductive agent, an optional binder, and any other components in a solvent and stirring them uniformly. The solvent may be N-methylpyrrolidone (NMP), but is not limited thereto.

In some embodiments, the negative tab may comprise a negative current collector and a first metal layer provided on at least one surface of the negative current collector, the metal element in the first metal layer comprising one or more of an alkali metal element, an alkaline earth metal element, zinc, and aluminum. Optionally, the metal material in the first metal layer comprises one or more of a simple substance of lithium, a lithium alloy, a simple substance of sodium, a sodium alloy, a simple substance of potassium, a potassium alloy, a simple substance of magnesium, a magnesium alloy, a simple substance of zinc, a zinc alloy, a simple substance of aluminum, and an aluminum alloy.

The lithium alloy may be an alloy of metallic lithium with other metal elements or non-metal elements. As an example, the other metal elements in the lithium alloy may include one or more of tin, zinc, aluminum, magnesium, silver, gold, gallium, indium, and platinum, and the non-metal elements in the lithium alloy may include one or more of boron, carbon, and silicon.

The sodium alloy may be an alloy of metallic sodium with other metal elements or non-metal elements. As an example, the other metal elements in the sodium alloy may include one or more of tin, zinc, aluminum, magnesium, silver, gold, gallium, indium, and platinum, and the non-metal elements in the sodium alloy may include one or more of boron, carbon, and silicon.

The magnesium alloy may be an alloy of metallic magnesium with other metal elements or non-metal elements. As an example, the other metal elements in the magnesium alloy may include one or more of tin, zinc, aluminum, sodium, lithium, silver, gold, gallium, indium, and platinum, and the non-metal elements in the magnesium alloy may include one or more of boron, carbon, and silicon.

The zinc alloy may be an alloy of metallic zinc with other metal elements or non-metal elements. As an example, the other metallic elements in the zinc alloy may include one or more of tin, lithium, sodium, aluminum, magnesium, silver, gold, gallium, indium, platinum, and the non-metallic elements in the zinc alloy may include one or more of boron, carbon, silicon.

The aluminum alloy may be an alloy of metallic aluminum with other metal elements or non-metal elements. As an example, the other metal elements in the aluminum alloy may include one or more of tin, zinc, lithium, sodium, magnesium, silver, gold, gallium, indium, and platinum, and the non-metal elements in the aluminum alloy may include one or more of boron, carbon, and silicon.

In some embodiments, the negative tab may include only a negative current collector.

In some embodiments, the negative current collector may include a metal foil sheet, a three dimensional porous current collector, or a composite current collector. Examples of the metal foil may include a copper foil, a copper alloy foil, a nickel foil, and a nickel alloy foil. Examples of the three dimensional porous current collector may included copper mesh, nickel mesh, foamed copper, and foamed nickel. The composite current collector may include a high-molecule material base layer and a metal material layer formed on at least one surface of the high-molecule material base layer. As an example, the metal material may include one or more of copper, a copper alloy, nickel, a nickel alloy, titanium, a titanium alloy, silver, and a silver alloy. As an example, the high-molecule material base layer may include one or more of polypropylene (PP), polyethylene terephthalate (PET), polybutylene terephthalate (PBT), polystyrene (PS), and polyethylene (PE).

In some embodiments, the surface of the negative current collector may further have a modified layer.

In some embodiments, the battery further comprises a separator which may be disposed between the positive tab and the negative tab, primarily to prevent internal short circuits. The type of the separator is not particularly limited, and any known film with porous structure having good chemical stability and mechanical stability can be selected.

In some embodiments, for the separator, a material may be one or more of glass fiber, non-woven fabric, polyethylene, polypropylene, polyvinylidene fluoride, and polyimide. The separator may be a single-layer film or a multilayer composite film. When the separator is a multilayer composite film, the materials of respective layers may be the same or different.

In some embodiments, the positive tab, separator, and negative tab may be fabricated into an electrode assembly by a winding process and/or a lamination process.

In some embodiments, the battery may include an outer package. The outer package may be used to encapsulate the electrode assembly and the electrolyte described above.

In some embodiments, the outer package of the battery may be a hard shell, such as a hard plastic shell, an aluminum shell, a steel shell, etc. The outer package of the battery may also be a pouch, such as a bag-type pouch. The material of the pouch may be an aluminum plastic film or a plastic such as one or more of polypropylene (PP), polybutylene terephthalate (PBT), and polybutylene succinate (PBS).

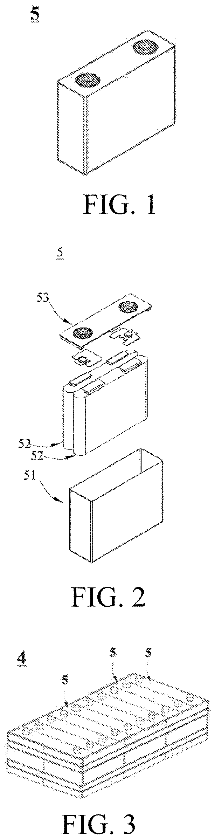

The shape of the battery is not particularly limited in the present application, and may be a cylindrical shape, a square shape, or any other shape. FIG. 1 shows a battery 5 having a square structure as an example.

In some embodiments, as shown in FIG. 2, the outer package may include a housing 51 and a cover plate 53. The housing 51 may include a bottom plate and a side plate attached to the bottom plate, the bottom plate and the side plate forming a accommodation chamber. The housing 51 has an opening communicating with the accommodation chamber, and the cover plate 53 is used to cover the opening to close the accommodation chamber. The positive tab, the negative tab, and the separator may be formed into the electrode assembly 52 by a winding process and/or a lamination process. The electrode assembly 52 is packaged in the accommodation chamber. The electrode assembly 52 is soaked in the electrolyte. The battery 5 may have one or more electrode assemblies 52, and the number may be adjusted as needed.

A method of making a battery is well known. In some embodiments, the positive tab, separator, negative tab, and electrolyte may be assembled to form a battery. As an example, the positive tab, the separator and the negative tab may be formed into an electrode assembly by a winding process and/or a lamination process, the electrode assembly is placed in an outer package, drying is performed, and an electrolyte is then injected, followed by steps such as sealing, standing, battery formation, and shaping, to obtain a battery.

In some embodiments, the battery provided in the embodiments of the present application may be assembled into a battery module which may have a plurality of batteries, and a specific number may be adjusted according to the application and capacity of the battery module.

FIG. 3 is a schematic view of a battery module 4 as one example. As shown in FIG. 3, in the battery module 4, a plurality of batteries 5 may be arranged in series along the length direction of the battery module 4. Of course, they may be arranged in any other manner. Further, the plurality of batteries 5 may be fixed by a fastener.

Optionally, the battery module 4 may further include a housing having an accommodation space in which the plurality of batteries 5 are accommodated.

In some embodiments, the battery modules described above may also be assembled into a battery pack, and the number of battery modules included in the battery pack may be adjusted according to the application and capacity of the battery pack.

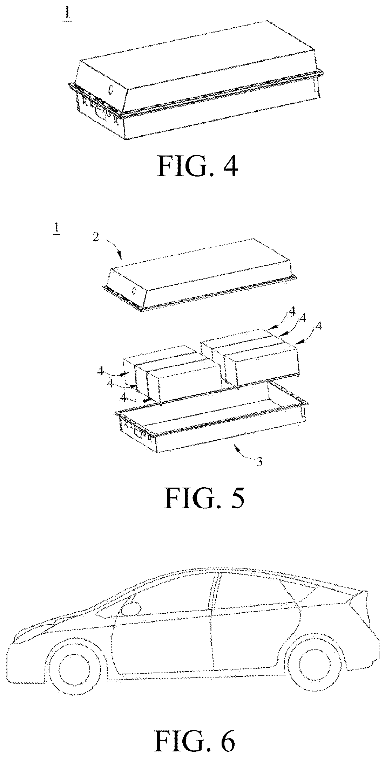

FIGS. 4 and 5 are schematic views of the battery pack 1 as one example. As shown in FIGS. 4 and 5, the battery pack 1 may include a battery box and a plurality of battery modules 4 provided in the battery box. The battery box includes an upper box body 2 and a lower box body 3, the upper box body 2 being used to cover the lower box body 3 to form a closed space for accommodating the battery module 4. The plurality of battery modules 4 may be arranged in any manner in the battery box.

### Electrical device

The embodiment of the present application also provides an electrical device including one or more of the battery, battery module, or battery pack provided in the present application. The battery, the battery module or the battery pack may be used as a power source or an energy storage unit of the electrical device. The electrical device may include, but not limited to, a mobile apparatus (e.g., a cellular phone, a tablet computer, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like.

For the electrical device, the battery, battery module or battery pack may be selected according to its use requirements.

FIG. 6 is a schematic view of an electrical device as one example. The electrical device is a pure electric vehicle, a hybrid electric vehicle, a plug-in hybrid electric vehicle, or the like. For the high power and high energy density required by the electrical device, a battery pack or a battery module may be used.

As another example, the electrical device may be a cellular phone, a tablet computer, a notebook computer, etc. Generally, the electrical device is compact, and may use a battery as a power source.

### Example

The following example particularly describes the disclosure of the present application. The example is only used for illustration, since various modifications and changes within the scope of the present application are obvious to those skilled in the art. Unless otherwise stated, all parts, percentages and ratios reported in the following example are on a mass basis. All reagents used in the examples are commercially available or can be synthesized according to conventional methods, and used directly without further processing. The instruments used in the example are commercially available.

### Synthesis of First Ether Solvent and Second Ether Solvent

The present application illustratively provides the method for preparing several of the first ether solvents and several of the second ether solvents. Other first ether solvents and second ether solvents may be prepared with reference to this exemplary method. According to the exemplified preparation method of the compound, those skilled in the art may easily obtain a specific method for carrying out respective synthetic steps from relevant scientific literature or standard textbooks in the field. A compound commercially available or known in the literature is used as a raw material for the synthesis, unless specified otherwise. Those skilled in the art of organic synthesis would recognize that the nature and order of the proposed synthetic steps may be varied to optimize the generation of the compound described herein.

The process described in the present application may be monitored according to any suitable method known in the art. For example, product generation can be monitored by spectroscopic means such as nuclear magnetic resonance spectroscopy (NMR, e.g., ¹H or ¹³C or ¹⁹F), infrared spectroscopy (IR), mass spectrometry (MS), etc.

### Synthesis of Compound A-4

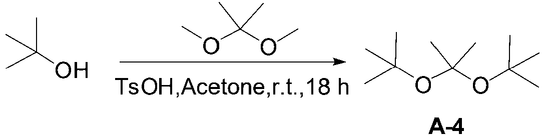

t-butanol (20 g, 0.270 mol), 2, 2-dimethoxypropane (14.05 g, 0.135 mol), and p-toluenesulfonic acid (TsOH, 23.23 g, 0.135 mol) were taken and added to a 250-mL single-neck flask, dissolved in 100 mL of acetone and stirred at room temperature (25°C) for 18 h. After the reaction was completed, the acetone was removed under reduced pressure, to finally obtain 17.62 g of compound A-4 with a yield of 69.36% by distilling under reduced pressure.

¹H NMR (CDCl₃, 400 MHz), δ (ppm): 1.48(s, 6H), 1.22 (s, 18H).

¹³C NMR (CDCl₃, 100 MHz), δ(ppm): 85.3, 60.5, 30.9, 29.8.

HRMS:C₁₁H₂₄O₂, found: Exact Mass, calcd: 188.1776.

### Synthesis of Compound A-7

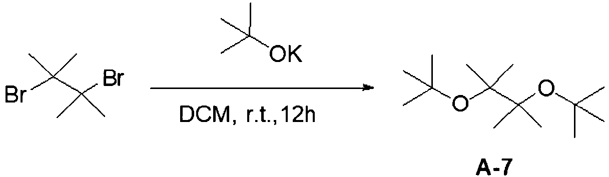

2, 3-dibromo-2, 3-dimethylbutane (24.4 g, 0.10 mol), and potassium tert-butoxide (23.56 g, 0.21 mol) were taken and added to a 250-mL single-neck flask, dissolved in 100 mL of dichloromethane (DCM), and stirred at room temperature (25°C) for 12 h. After the reaction was completed, the dichloromethane was removed under reduced pressure, finally to obtain 17.57 g of compound A-7 with the yield of 76.25% by distilling under reduced pressure.

¹H NMR (CDCl₃, 400 MHz), δ (ppm): 1.26(s, 12H), 1.22 (s, 18H).

¹³C NMR (CDCl₃, 100 MHz), δ(ppm): 79.7, 64.3, 30.7, 19.8.

HRMS:C₁₄H₃₀O₂, found: Exact Mass, calcd: 230.2246.

### Synthesis of Compound B-3

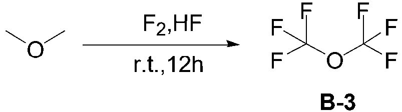

20 mL of dimethyl ether, and 30 mL of 40% HF were taken and added to a 100-mL autoclave, after nitrogen displacement, fluorine gas was fed, and the mixture was stirred at room temperature (25°C) for 12 h until no chemical shift for hydrogen was observed in atomic spectrum of hydrogen. After the reaction was completed, pH was adjusted to neutral with aluminum sulfate and an appropriate amount of lime, to obtain 95.36 g of compound B-3 with the yield of 88.21 % by liquid separation and distillation under reduced pressure.

¹³C NMR (CDCl₃, 100 MHz), δ(ppm): 102.3.

¹⁹F NMR (CDCl₃, 100 MHz), δ(ppm): -65.4.

HRMS:C₂F₆O, found: Exact Mass, calcd: 153.9853.

### Example 1

### (1) Preparation of Electrolyte

First ether solvent A-1, and second ether solvent B-3 were taken and sufficiently mixed at a mass ratio of 1: 1 to form a solvent. 1.87g of a lithium salt of bisfluorosulfonylimide was taken and added to 5 ml of the solvent and sufficiently stirred to prepare an electrolyte having a concentration of 2 mol/L.

### (2) Preparation of Positive Tab

Positive electrode active material NCM811, acetylene black as a conductive agent, and PVDF as a binder were mixed at a mass ratio of 98: 1: 1, added to NMP as a solvent, and stirred until the system is uniform to obtain a positive electrode slurry having a solid content of 70%; and the positive electrode slurry was uniformly coated on both surfaces of an aluminum foil as a positive current collector, the aluminum foil is transferred to an oven after drying in the air for further drying, and then the aluminum foil is cut into a rectangle of 40 mm × 50 mm for later use as a positive tab.

### (3) Preparation of Negative Tab

A lithium foil having a thickness of 50 µm was laminated with a copper foil having a thickness of 12 µm by a roll press method, and then was cut into a rectangular shape of 41 mm × 51 mm for later use as a negative tab.

### (4) Preparation of Separator

A polyethylene porous membrane was cut into a rectangle of 45 mm × 55 mm for later use as a separator.

### (5) Preparation of Battery

One cut positive tab and two cut negative tabs were taken and stacked, and were separated by a separator to obtain an electrode assembly; and the electrode assembly was placed in an aluminum plastic bag, and 0.3g of the electrolyte prepared above was injected, followed by vacuum heat sealing and standing (at least for 6 h) to obtain a battery. The rated capacity of the battery was 140 mAh.

### Examples 2-39

A battery preparation method is similar to that of Example 1, except that the components of an electrolyte are different, which are described in detail in table 1.

### Example 40

A battery preparation method is similar to that of Example 1, except that the components of an electrolyte are different.

1.87g of a lithium salt of bisfluorosulfonylimide was taken and added to 5 ml of first ether solvent A-1 and sufficiently stirred to prepare an electrolyte having a concentration of 2 mol/L.

### Comparative Example 1

A battery preparation method is similar to that of Example 1, except that the components of an electrolyte are different.

1.87g of a lithium salt of bisfluorosulfonylimide was taken and added to 5 ml of an ether solvent and sufficiently stirred to prepare an electrolyte having a concentration of 2 mol/L.

### Comparative Example 2

A battery preparation method is similar to that of Example 1, except that the components of an electrolyte are different.

1.87g of a lithium salt of bisfluorosulfonylimide was taken and added to 5 ml of a glycol dimethyl ether solvent and sufficiently stirred to prepare an electrolyte having a concentration of 2 mol/L.

### Comparative Example 3

A battery preparation method is similar to that of Example 1, except that the components of an electrolyte are different.

Ethylene glycol dimethyl ether and 1, 1, 2, 2-tetrafluoroethyl-2, 2, 3, 3-tetrafluoropropyl ether in a mass ratio of 1: 1 were taken and thoroughly mixed to form a solvent. 1.87g of a lithium salt of bisfluorosulfonylimide was taken and added to 5 ml of the solvent and sufficiently stirred to prepare an electrolyte having a concentration of 2 mol/L.

### Test Section

At 25 °C, the battery prepared above was taken and charged at a constant current of 0.2C (28 mA) to 4.5 V, and continuously charged at a constant voltage to a current of 0.1C (14 mA), at which time the battery was in a fully charged state, and the charging capacity at this point was recorded as a first-cycle charging capacity; and after the battery was left to stand for 5 min, it was discharged at a constant current of 1C (140 mA) to 2.8 V, then completing one cycle charge-discharge process, and the discharging capacity at this point was recorded as a first-cycle discharging capacity. The battery was subjected to a cyclic charge-discharge test according to the method described above, the discharge capacity after each cycle was recorded until the discharge capacity of the battery was attenuated to 80% of the first-cycle discharge capacity, and the cycle number at this time was used to characterize the cycle performance of the battery. The higher the cycle number of the battery is, the better the cycle performance is.

**Table 1**

| No. | Solvent | | | Lithium Salt | | Number of Cycle |
|---|---|---|---|---|---|---|
| | First Ether Solvent | Second Ether Solvent | Mass Ratio of the First Ether Solvent to the Second Ether Solvent | Type | Concentration (mol/L) | |
| Example 1 | A-1 | B-3 | 1:1 | LiFSI | 2 | 538 |
| Example 2 | A-4 | B-3 | 1:1 | LiFSI | 2 | 530 |
| Example 3 | A-7 | B-3 | 1:1 | LiFSI | 2 | 521 |
| Example 4 | A-2 | B-3 | 1:1 | LiFSI | 2 | 421 |
| Example 5 | A-9 | B-3 | 1:1 | LiFSI | 2 | 362 |
| Example 6 | A-10 | B-3 | 1:1 | LiFSI | 2 | 378 |
| Example 7 | A-11 | B-3 | 1:1 | LiFSI | 2 | 352 |
| Example 8 | A-12 | B-3 | 1:1 | LiFSI | 2 | 341 |
| Example 9 | A-13 | B-3 | 1:1 | LiFSI | 2 | 330 |
| Example 10 | A-14 | B-3 | 1:1 | LiFSI | 2 | 439 |
| Example 11 | A-16 | B-3 | 1:1 | LiFSI | 2 | 401 |
| Example 12 | A-1 | B-8 | 1:1 | LiFSI | 2 | 519 |
| Example 13 | A-1 | B-13 | 1:1 | LiFSI | 2 | 526 |
| Example 14 | A-1 | B-10 | 1:1 | LiFSI | 2 | 402 |
| Example 15 | A-1 | B-14 | 1:1 | LiFSI | 2 | 340 |
| Example 16 | A-1 | B-15 | 1:1 | LiFSI | 2 | 378 |
| Example 17 | A-1 | B-16 | 1:1 | LiFSI | 2 | 349 |
| Example 18 | A-1 | B-17 | 1:1 | LiFSI | 2 | 327 |
| Example 19 | A-1 | B-18 | 1:1 | LiFSI | 2 | 331 |
| Example 20 | A-1 | B-19 | 1:1 | LiFSI | 2 | 396 |
| Example 21 | A-1 | B-21 | 1:1 | LiFSI | 2 | 337 |
| Example 22 | A-1 | B-3 | 1:1 | LiDFOB | 2 | 501 |
| Example 23 | A-1 | B-3 | 1:1 | LiPF₆ | 2 | 348 |
| Example 24 | A-1 | B-3 | 0.05:1 | LiFSI | 2 | 290 |
| Example 25 | A-1 | B-3 | 0.1:1 | LiFSI | 2 | 341 |
| Example 26 | A-1 | B-3 | 0.3:1 | LiFSI | 2 | 378 |
| Example 27 | A-1 | B-3 | 0.5:1 | LiFSI | 2 | 458 |
| Example 28 | A-1 | B-3 | 1.5:1 | LiFSI | 2 | 497 |
| Example 29 | A-1 | B-3 | 3:1 | LiFSI | 2 | 442 |
| Example 30 | A-1 | B-3 | 10:1 | LiFSI | 2 | 389 |
| Example 31 | A-1 | B-3 | 20:1 | LiFSI | 2 | 301 |
| Example 32 | A-1 | B-3 | 1:1 | LiFSI | 0.2 | 311 |
| Example 33 | A-1 | B-3 | 1:1 | LiFSI | 0.5 | 398 |
| Example 34 | A-1 | B-3 | 1:1 | LiFSI | 1 | 451 |
| Example 35 | A-1 | B-3 | 1:1 | LiFSI | 1.5 | 497 |
| Example 36 | A-1 | B-3 | 1:1 | LiFSI | 2.5 | 503 |
| Example 37 | A-1 | B-3 | 1:1 | LiFSI | 3 | 469 |
| Example 38 | A-1 | B-3 | 1:1 | LiFSI | 4 | 406 |
| Example 39 | A-1 | B-3 | 1:1 | LiFSI | 6 | 321 |
| Example 40 | A-1 | - | - | LiFSI | 2 | 287 |
| Comparative Example 1 | Diethyl ether | - | - | LiFSI | 2 | 12 |
| Comparative Example 2 | Ethylene glycol dimethyl ether | - | - | LiFSI | 2 | 24 |
| Comparative Example 3 | Ethylene glycol dimethyl ether | 1, 1, 2, 2-tetrafluoroethyl-2, 2, 3, 3-tetrafluoropropyl ether | 1:1 | LiFSI | 2 | 264 |

From the test results of Examples 1-40 and Comparative Examples 1-3, it can be seen that the electrolyte provided in Examples 1-40 can improve the cycle life of a battery, particularly when the battery is under a high voltage.

From the test results of Examples 1-11, it can also be seen that when the first ether solvent is A-1, A-4, or A-7, the cycle life of the battery can be further improved.

From the test results of Examples 1 and 12-21, it can also be seen that when the second ether solvent is B-3, B-8, or B-13, the cycle life of the battery can be further improved.

Combining the test results of Examples 1 and 22-23, it can also be seen that when the anion of the electrolytic salt includes a bistrifluoromethanesulfonylimide anion (TFSI⁻) and a difluorooxalic acid borate anion (DFOB⁻), the cycle life of the battery can be further improved.

From the test results of Examples 1-39 and Example 40, it can also be seen that when the solvent includes both the first ether solvent and the second ether solvent, the cycle life of the battery can be further improved.

As noted, the present application is not limited to the above-described embodiment. The above-described embodiment is merely an example, and the technical scope of the present application includes the embodiment having the configuration with substantially the same technical concept and exhibiting the same effect within the scope of the technical scheme of the present application. Additionally, the scope of the present application also include various modifications to the embodiments conceived by those skilled in the art, and other embodiments constructed by combining some constituent elements in the embodiment without departing from the spirit of the present application.

## Claims

1. An electrolyte comprising a solvent and an electrolytic salt dissolved in the solvent, wherein the solvent comprises a first solvent, the first solvent comprises an ether solvent, and the ether solvent has a molecular structure in which the α-carbon atom directly bonded to an oxygen atom in an ether-oxygen bond function group does not have a hydrogen atom directly bonded to the α-carbon atom.

2. The electrolyte according to claim 1, wherein,
the ether solvent comprises 1-5 ether-oxygen bond function groups; and/or
the ether solvent has a chain structure or a cyclic structure.

3. The electrolyte according to claim 1 or 2, wherein the ether solvent comprises one or more of the compounds represented by formula I or formula II, 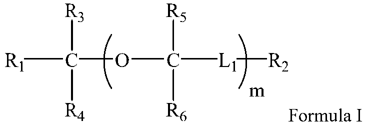 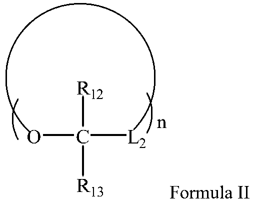 in formula I,
m is an integer of 1-5,
R₁ comprises one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl,
R₂ comprises one or more of a hydrogen atom, a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl,
R₃, R₄, R₅ and R₆ each independently comprise one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl,
L₁ each independently comprises a single bond, and a group as shown by 1a or 1b, and # represents a connection position, wherein R₇, R₈, R₉, and R₁₀ each independently comprise one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, R₁₁ each independently comprise one or more of C1-C5 alkylene, C1-C5 haloalkylene, C3-C7 cycloalkylene, C3-C7 halocycloalkylene, C6-C10 arylene, and C6-C10 haloarylene, and R₂ is not a hydrogen atom when L₁ is a single bond; 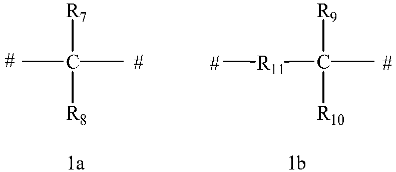
in formula II,
n is an integer of 1-5,
R₁₂, and R₁₃ each independently comprise one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, and
L₂ each independently comprises a single bond, and a group as shown by 2a or 1b, wherein R₁₄, R₁₅, R₁₆, and R₁₇ each independently comprise one or more of a halogen atom, C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, and R₁₈ each independently comprises one or more of C1-C5 alkylene, C1-C5 haloalkylene, C3-C7 cycloalkylene, C3-C7 halocycloalkylene, C6-C10 arylene, and C6-C10 haloarylene;

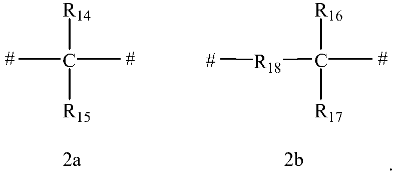

4. The electrolyte according to claim 3, wherein the ether solvent comprises a first ether solvent comprising one or more of the compounds represented by formula I and formula II,
wherein in formula I, R₁ comprises one or more of C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, R₃, R₄, R₅, and R₆ each independently comprise one or more of C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, R₇, R₈, R₉, and R₁₀ each independently comprise one or more of C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, and R₂ is not a hydrogen atom or a halogen atom when L₁ is a single bond;
in formula II, R₁₂, and R₁₃ each independently comprise one or more of C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl, and R₁₄, R₁₅, R₁₆, and R₁₇ each independently comprise one or more of C1-C5 alkyl, C1-C5 haloalkyl, C3-C7 cycloalkyl, C3-C7 halocycloalkyl, C6-C10 aryl, C6-C10 haloaryl, C7-C10 arylalkyl, C7-C10 haloarylalkyl, C7-C10 alkylaryl, and C7-C10 haloalkylaryl.

5. The electrolyte according to claim 4, wherein the first ether solvent satisfies at least one of the following conditions (1) to (11):
(1) R₁ comprises one or more of C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally, R₁ comprises C1-C3 alkyl;
(2) R₂ comprises one or more of a hydrogen atom, a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally, R₂ comprises one or more of a hydrogen atom, and C1-C3 alkyl;
(3) R₃, R₄, R₅, and R₆ each independently comprise one or more of C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally R₃, R₄, R₅, and R₆ each independently comprise C1-C3 alkyl;
(4) R₇, R₈, R₉, and R₁₀ each independently comprise one or more of C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally R₇, R₈, R₉, and R₁₀ each independently comprise C1-C3 alkyl;
(5) R₁₁ each independently comprises one or more of C1-C5 alkylene, and C1-C5 haloalkylene, and optionally R₁₁each independently comprises C1-C3 alkylene;
(6) R₁₂, and R₁₃ each independently comprise one or more of C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally R₁₂, and R₁₃ each independently comprise C1-C3 alkyl;
(7) R₁₄, R₁₅, R₁₆, and R₁₇ each independently comprise one or more of C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally R₁₄, R₁₅, R₁₆, and R₁₇ each independently comprise C1-C3 alkyl;
(8) R₁₈ each independently comprises one or more of C1-C5 alkylene, and C1-C5 haloalkylene, and optionally R₁₈ each independently comprises C1-C3 alkylene;
(9) m is 1, 2 or 3, and optically, m is 1 or 2;
(10) n is 1, 2 or 3, and optically, n is 1 or 2; and
(11) the first ether solvent does not contain a halogen atom.

6. The electrolyte according to claim 3, wherein the ether solvent comprises a second ether solvent comprising one or more of the compounds represented by formula I and formula II,
wherein in formula I, at least one of R₁, R₃, R₄, R₅, R₆, R₇, R₈, R₉ and R₁₀ is a fluorine atom; and
in formula II, at least one of R₁₂, R₁₃, R₁₄, R₁₅, R₁₆ and R₁₇ is a fluorine atom.

7. The electrolyte according to claim 4 or 5, wherein the ether solvent comprises a first ether solvent and a second ether solvent, and the second ether solvent comprises one or more compounds represented by formula I or formula II,
wherein in formula I, at least one of R₁, R₃, R₄, R₅, R₆, R₇, R₈, R₉ and R₁₀ is a fluorine atom; and
In formula II, at least one of R₁₂, R₁₃, R₁₄, R₁₅, R₁₆ and R₁₇ is a fluorine atom.

8. The electrolyte according to claim 6 or 7, wherein the second ether solvent satisfies at least one of the following conditions (1) to (13):
(1) R₁ comprises one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally, R₁ comprises one or more of a halogen atom, C1-C3 alkyl, and C1-C3 haloalkyl;
(2) R₂ comprises one or more of a hydrogen atom, a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally, R₂ comprises one or more of a hydrogen atom, a halogen atom, C1-C3 alkyl, and C1-C3 haloalkyl;
(3) R₃, R₄, R₅, and R₆ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally R₃, R₄, R₅, and R₆ each independently comprise one or more of a halogen atom, C1-C3 alkyl, and C1-C3 haloalkyl;
(4) R₇, R₈, R₉, and R₁₀ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally, R₇, R₈, R₉, and R₁₀ each independently comprise one or more of a halogen atom, C1-C3 alkyl, and C1-C3 haloalkyl;
(5) R₁₁ each independently comprises one or more of C1-C5 alkylene, and C1-C5 haloalkylene, and optionally, R₁₁ each independently comprises one or more of C1-C3 alkylene, and C1-C3 haloalkylene;
(6) R₁₂, and R₁₃ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally, R₁₂, and R₁₃ each independently comprise one or more of a halogen atom, C1-C3 alkyl, and C1-C3 haloalkyl;
(7) R₁₄, R₁₅, R₁₆, and R₁₇ each independently comprise one or more of a halogen atom, C1-C3 alkyl, C1-C3 haloalkyl, C3-C6 cycloalkyl, C3-C6 halocycloalkyl, phenyl, halophenyl, phenylmethyl, halophenylmethyl, methylphenyl, and halomethylphenyl, and optionally, R₁₄, R₁₅, R₁₆, and R₁₇ each independently comprise one or more of a halogen atom, C1-C3 alkyl, and C1-C3 haloalkyl;
(8) R₁₈ each independently comprises one or more of C1-C5 alkylene, and C1-C5 haloalkylene, and optionally, R₁₈ each independently comprises one or more of C1-C3 alkylene, and C1-C3 haloalkylene;
(9) R₁, R₃, R₄, R₅, R₆, R₇, R₈, R₉ and R₁₀ are fluorine atoms;
(10) R₁₂, R₁₃, R₁₄, R₁₅, R₁₆ and R₁₇ are fluorine atoms;
(11) m is 1, 2 or 3, and optically, m is 1 or 2;
(12) n is 1, 2 or 3, and optically, n is 1 or 2; and
(13) the second ether solvent has a perfluoroether structure.

9. The electrolyte according to claim 7 or 8, wherein the mass of the first ether solvent denoted as a, and the mass of the second ether solvent denoted as b enable 0.1: 1≤a: b≤10: 1, optionally 0.3: 1≤a: b≤3: 1, further optionally 0.5: 1≤a: b≤1.5: 1.

10. The electrolyte according to any one of claims 4-5 and 7-9, wherein the first ether solvent comprises one or more of the following compounds: 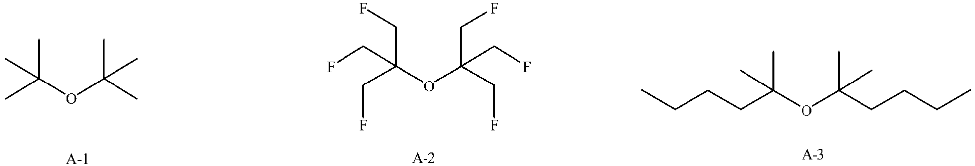 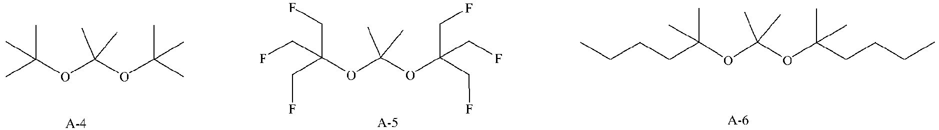 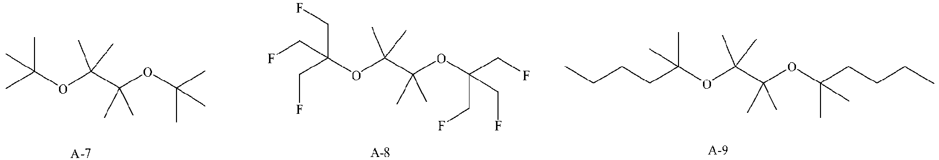 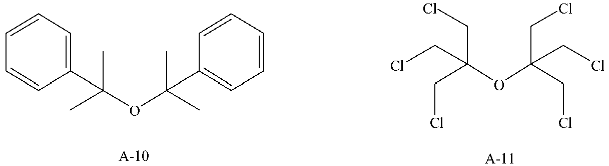 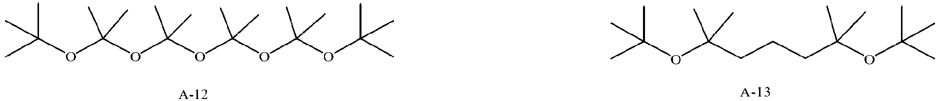 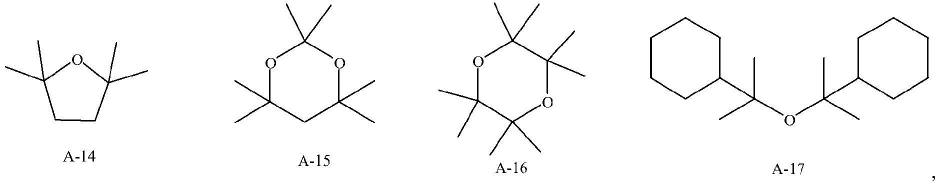 and optionally, the first ether solvent comprises one or more of A-1, A-4, and A-7.

11. The electrolyte according to any one of claims 6-9, wherein the second ether solvent comprises one or more of the following compounds: 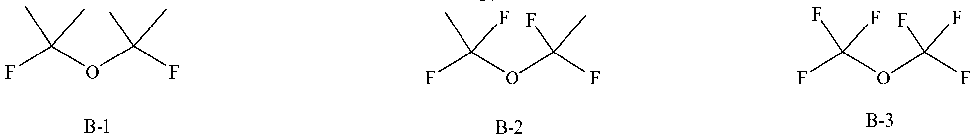 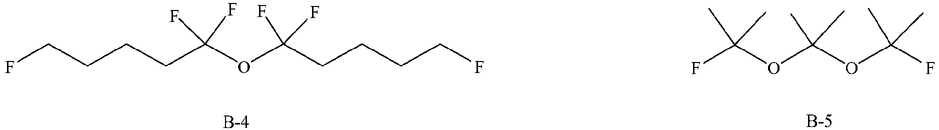 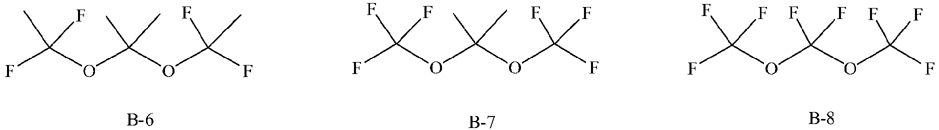 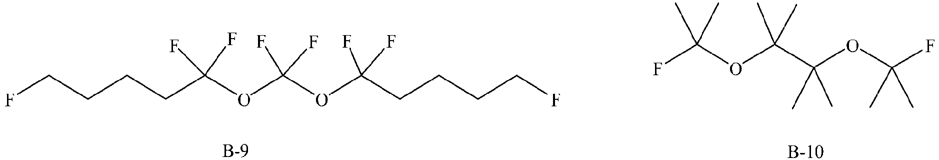 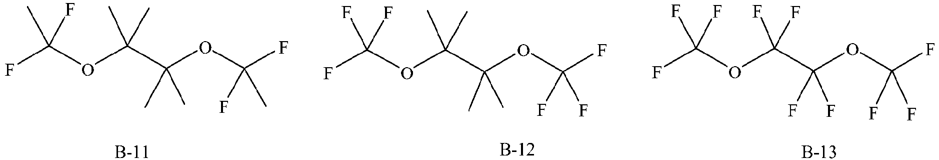 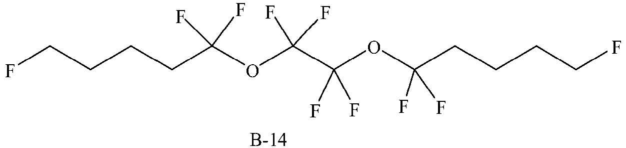 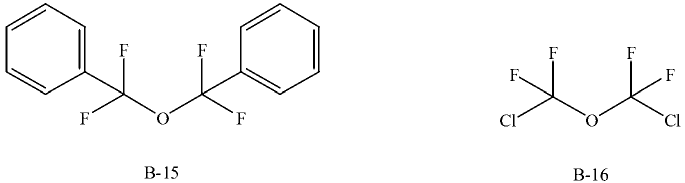 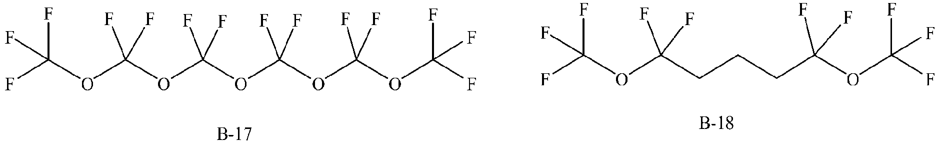 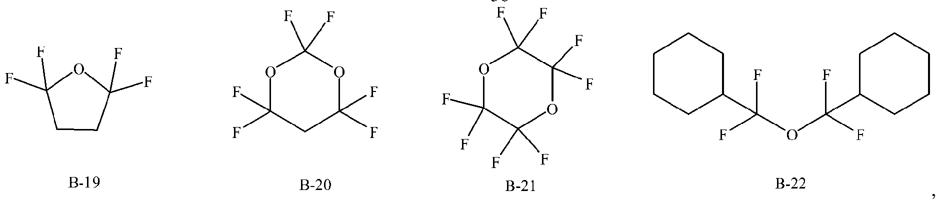 optionally, the second ether solvent comprises one or more of B-3, B-8, and B-13.

12. The electrolyte according to any one of claims 1-11, wherein the mass percentage content of the first solvent denoted as W₁ enables, based on the total mass of the solvent, 70%≤W₁≤100%, optionally 85%≤W₁≤100%.

13. The electrolyte according to claim 12, wherein W₁ is 100%.

14. The electrolyte according to any one of claims 1-12, wherein the solvent further comprises a second solvent comprising one or more of ester and halogenated ester solvents, sulfone solvents, nitrile solvents, ether and fluoroether solvents, hydrocarbon and halogenated hydrocarbon solvents;
and optionally, the second solvent comprises one or more of ethylene carbonate, dimethyl carbonate, diethyl carbonate, methyl ethyl carbonate, ethylene carbonate, propylene carbonate, fluoroethylene carbonate, difluoroethylene carbonate, methyl trifluoroethyl carbonate, ethyl trifluoroethyl carbonate, di(2, 2, 2-trifluoroethyl)carbonate, methyl formate, ethyl formate, propyl formate, methyl acetate, ethyl acetate, propyl acetate, methyl propionate, ethyl propionate, propyl propionate, methyl 2, 2, 2-trifluoroacetate, ethyl 2, 2, 2-trifluoroacetate, methyl ether, ethyl ether, propyl ether, butyl ether, methyl ethyl ether, methyl propyl ether, methyl butyl ether, ethyl propyl ether, ethyl butyl ether, propyl butyl ether, dimethoxymethane, diethoxymethane, dipropoxymethane, dimethoxyethane, dimethoxypropane, diethoxyethane, ethylene glycol methyl ethyl ether, diethylene glycol dimethyl ether, triethylene glycol dimethyl ether, tetraethylene glycol dimethyl ether, tetrahydrofuran, 1, 3-dioxolane, tetrahydropyran, 1, 3-dioxane, 1, 4-dioxane, 1, 1, 2, 2-tetrafluoroethyl-2, 2, 3, 3-tetrafluoropropyl ether, 1, 2-bis(1, 1, 2, 2-tetrafluoroethoxy)ethane, di(2, 2, 2-trifluoroethyl)ether, 1, 1, 2, 3, 3, 3-hexafluoropropyl ethyl ether, 1H, 1H, 5H-octafluoropentyl-1, 1, 2, 2-tetrafluoroethyl ether, ethyl trifluoromethyl ether, difluoromethyl-2, 2, 3, 3, 3-pentafluoropropyl ether, heptafluoropropyl-1, 2, 2, 2-tetrafluoroethyl ether, difluoromethyl 2, 2, 3, 3-tetrafluoropropyl ether, perfluoroisopropyl methyl ether, 1, 1, 2, 2-tetrafluoroethyl-2, 2, 2-tetrafluoroethyl ether, ethyl-1, 1, 2, 2-tetrafluoroethyl ether, ethyl-1, 2, 2, 2-tetrafluoroethyl ether, bis(1, 2, 2, 2-tetrafluoroethyl)ether, dimethyl sulfone, dimethyl sulfoxide, sulfolane, ethylmethylsulfone, tetramethylenesulfoxide, ethylmethylsulfoxide, diethylsulfone, diethylsulfoxide, methylphenyl sulfone, methylphenyl sulfoxide, ethylphenyl sulfone, ethylphenyl sulfoxide, vinylphenyl sulfone, vinylphenyl sulfoxide, acetonitrile, propionitrile, butyronitrile, succinonitrile, 2-butenenitrile, cyclohexane, benzene, toluene, p-xylene, m-xylene, o-xylene, fluorobenzene, p-difluorobenzene, m-difluorobenzene, o-difluorobenzene, benzotrifluoride, trifluoromethoxybenzene, decafluoropentane, and perfluoropentanone.

15. The electrolyte according to claim 14, wherein the mass percentage content of the second solvent denoted as W₂ enables 0< W₂≤30%, optionally 0<W₂≤15% based on the total mass of the solvent.

16. The electrolyte according to any one of claims 1-15, wherein the electrolyte further comprises an additive comprising one or more of propane sultone, vinyl sulfate, vinyl sulfite, tris(trimethylsilyl)phosphate, tris(trimethylsilyl)phosphite, tris(trifluoroethyl)phosphate, tris(trifluoroethyl)phosphite, tris (trimethylsilyl) borate, dimethyl maleic anhydride, and butyl 1, 4-diisocyanate.

17. The electrolyte according to any one of claims 1-16, wherein the electrolytic salt comprises a first metal cation and a first anion,
the first metal cation comprises one or more of an alkali metal ion, an alkaline earth metal ion, a zinc ion, and an aluminum ion, and optionally one or more of a lithium ion, a sodium ion, a potassium ion, a magnesium ion, a calcium ion, a zinc ion, and an aluminum ion; and
the first anion comprises one or more of a bisfluorosulfonylimide anion, a bistrifluoromethanesulfonylimide anion, a bisoxalatoborate anion, a difluorooxalatoborate anion, a difluorobisoxalatophosphate anion, a tetrafluorooxalatophosphate anion, a difluorophosphate anion, a hexafluorophosphate anion, a tetrafluoroborate anion, a hexafluoroarsenate anion, and a trifluoromethanesulfonate anion, and optionally one or more of a bisfluorosulfonylimide anion, a bistrifluoromethanesulfonylimide anion, a bisoxalatoborate anion, a difluorooxalatoborate anion, a difluorobisoxalatophosphate anion, and a tetrafluorooxalatophosphate anion.

18. The electrolyte according to any one of claims 1-17, wherein the concentration of the electrolytic salt is 0.5-4 mol/L, optionally 1.5-2.5 mol/L.

19. A battery comprising a positive tab, a negative tab, and the electrolyte according to any one of claims 1-18.

20. The battery according to claim 19, wherein the negative tab comprises a negative current collector and a first metal layer provided on at least one surface of the negative current collector, the metal element in the first metal layer comprising one or more of an alkali metal element, an alkaline earth metal element, zinc, and aluminum;
and optionally, the metal material in the first metal layer comprises one or more of a simple substance of lithium, a lithium alloy, a simple substance of sodium, a sodium alloy, a simple substance of potassium, a potassium alloy, a simple substance of magnesium, a magnesium alloy, a simple substance of zinc, a zinc alloy, a simple substance of aluminum, and an aluminum alloy.

21. The battery according to claim 19 or 20, wherein the negative tab comprises only a negative current collector.

22. The battery according to claim 20 or 21, wherein the negative current collector comprises a metal foil sheet, a three dimensional porous current collector, or a composite current collector.

23. An electrical device comprising the battery according to any one of claims 19-22.
